# EUROPEAN PATENT APPLICATION

(11) **EP 3 428 810 A1**
(43) Date of publication of application: **16.01.2019**
(21) Application number: 18175552.1
(22) Date of filing: 01.06.2018
(51) Int. Cl.: G06F 17/30, G06Q 30/00

(54) **COMPUTER SOFTWARE PLATFORM FOR SUPPLY CHAIN**

(30) Priority: 14.07.2017 US 201762532768 P; 20.11.2017 US 201715819360
(71) Applicant: Avnet, Inc., Phoenix, AZ 85034 (US)
(72) Inventor: McDaniel, Wade, Phoenix, AZ Arizona 85028 (US); Deuchar, Paul, Scottsdale, AZ Arizona 85260 (US); Cowan, Robert, 06310 Beaulieu-sur-mer (FR)
(74) Representative: v. Bezold & Partner Patentanwälte - PartG mbB

(57) **Abstract**

Aspects of the present disclosure relate to systems and methods for a computer software platform for a supply chain. The disclosed improved computer software platform for a supply chain may be hosted by a distributor, and provide personalized portals to a group of users associated with supplier, where each supplier portal is customized to the user and includes the look and feel of the supplier. The platform supports multiple businesses and business models, and allows a user to easily change between multiple software environments without the need for multiple logins. The disclosed improved computer software platform may also provide alternate options within the supply chain to accommodate varying arrangements between entities in the supply chain.

## Description

### CROSS-REFERENCE TO RELATED APPLICATIONS

This application claims the benefit of U.S. Provisional Application No. 62/532,768, filed July 14, 2017, which is incorporated by reference in its entirety.

### TECHNICAL FIELD

The present disclosure relates to computer systems and methods for a computer software platform for a supply chain.

### BACKGROUND

A supply chain comprises the tasks, and the sequence of tasks, required when producing and distributing goods and services. Various aspects of the supply chain have been automated. For example, U.S. Patent No. 9,443,229 disclosed systems and methods for translating and managing messages, and optimizing shipping. Also, U.S. Patent No. 9,617,140 disclosed a computerized system for monitoring fluid levels in liquid containers in a supply chain.

In conventional supply chain software systems, a distributor website hosts the websites of multiple supplier companies. Customers or users can then visit the distributor website to get personalized pricing for the multiple supplier companies. To use the distributor website, a customer is given login information for each supplier company to access both the website and the personalized pricing. If a customer desires to switch between supplier companies, the customer must logoff or exit the software program for a first supplier, and then re-login with the customer's credentials for the second supplier.

In conventional systems, a single customer may be associated with numerous suppliers. This causes the management of different login information or email addresses, which is undesirable to the customer, and poses technical challenges to the customer computing device, supplier computing device and/or server system. Additionally, the server system may be burdened by the volume of login information, email addresses, permissions, and related data and information required to serve the needs of the multiple suppliers and users on the server system.

This process may also contribute towards delays in the supply chain as valuable time is wasted by users when logging in an out to interact with the multiple suppliers or customers necessary for conducting one or more supply chain activities. Sales may also be lost due to customer frustration and technical computer problems. Moreover, the increased volume of customers logging in and out of the software platform may place stress on the computing system including for example, the server system. For example, in conventional systems the server system may have had to check for authorization and permissions associated with customers each time a customer logs in, thus placing a burden on the server system and any associated database structure. Accordingly, there remains a need for a software application that allows for a single supplier or customer to interact with multiple customers, or suppliers, respectively, in a streamlined environment that does not cause lengthy delays or other technical problems.

Furthermore, conventional supply chain software systems did not allow for quick and easy personalization of webpages. Instead, either the distributor website host or the supplier company must create a custom-built website to create personalized webpages that meet the needs of the individual supplier and customer relationship. This is a time consuming and intensive information technology process that may require the use of specialized vendors and/or consultants. It also requires creating a website layout, capturing the look and feel of a supplier, and enabling the customized website with the look and feel of a supplier to be compatible on the distributor website host's website. These problems added costs and complexity to the distributor website host's computer system. This complexity increased the likelihood of computer bugs, slowed the systems, and created confusion and a possible loss of customers and/or suppliers.

Accordingly, while there has been automation in the supply chain industry, there remains a need to provide personalized supplier portals to groups of customers or users, while at the same time preserving the ability to quickly scale to support multiple supplier businesses and business models. A further need exists to allow a customer to quickly and easily change between multiple software environments. Still another need exists to assign unknown users to a correct environment of supplier websites. A further need exists to provide alternate options within the supply chain to accommodate varying arrangements between entities in the supply chain.

### SUMMARY

Aspects of the present disclosure relate to systems and methods for a computer software platform for a supply chain.

In one embodiment, an improved electronic system may include at least one computing device having a web browser and an input device, a non-transitory memory having processor executable instructions, and at least one server communicatively coupled to the at least one computing device via a network. The server may have a processor in communication with the non-transitory memory and an access gateway configured to determine whether a user of the computing device is permissioned to access data stored in an electronic database communicatively coupled to the server. The server may be configured by the processor executable instructions to receive, via the input device of the at least one computing device, user identifying information; submit, to the access gateway, the received user identifying information to retrieve, based on the user identifying information, a first set of parameters stored in the electronic database the user has permissions for; display, via the web browser of the at least one computing device, the first set of parameters; receive, via the input device of the at least one computing device, a selection for a first parameter among the first set of parameters; display, via the web browser of the at least one computing device, a second set of parameters based on the selected first parameter; receive, via the input device of the at least one computing device, a selection for a second parameter among the second set of parameters; construct, via a personalized portal creation module, a first set of one or more webpages including electronic data corresponding to the selected first parameter and the selected second parameter, wherein the electronic data is retrieved from the electronic database; display, via the web browser of the at least one computing device, the constructed first set of one or more webpages; receive, via the input device of the at least one computing device, a selection for a third parameter of the second set of parameters without submitting new user identifying information or resubmitting the received user identifying information to the access gateway; construct, via the personalized portal creation module, a second set of one or more webpages including electronic data corresponding to the selected first parameter and the selected third parameter; and display, via the web browser of the at least one computing device, the constructed second set of one or more webpages.

In one embodiment, a system includes a first device having a web browser and at least one server communicatively coupled to the first device via a network and having non-transitory memory storing computer-readable instructions and at least one processor. The execution of the instructions by the at least one processor may cause the server to: provide one or more web pages to a user of the first device via the web browser, the one or more web pages corresponding to a personalized portal for a supply chain associated with a first profile; receive, via the web browser, input from the first device identifying a second profile; create, via a personalized portal creation module, a personalized portal for a supply chain associated with the second profile by extracting information from a database communicatively coupled to the at least one server relevant to the second profile; and provide one or more web pages to the user of the first device via the web browser corresponding to the personalized portal for the supply chain associated with the second profile.

The computer software platform for a supply chain described herein may include the ability to (1) allow customers to switch between supplier websites on a distributor website host website without logging in and out, and maintaining the customized pricing and features for the customer for each supplier; (2) quickly scale the distributor website host platform to accommodate numerous customized supplier websites supporting multiple businesses and business models; (3) provide personalized portals to groups of users and select between multiple environments via a single sign-on; (4) add additional users and assign them the correct environment; (5) create personalized portals within a short period of time; and (6) support multiple payment arrangements.

The above functionality is provided through a computer software platform for a supply chain configured to assign one customer login that is operable for more than one supplier. The customer login will allow a customer to gain access to personalized features, such as goods, services, or pricing for each supplier. The customer can use website functionality, such as a dropdown menu on a distributor website host website to navigate between supplier websites. The supplier websites may have the look and feel of the supplier, giving the customer the impression of navigating the supplier's website.

The disclosed computer software platform for a supply chain is an improvement to the functioning of the computer system at least by (a) reducing the complexity of the system; (b) lessening the time a user has to be connected to the system; and (c) providing a common format or platform for suppliers to quickly create custom sites.

Further scope of applicability of the present disclosure will become apparent from the detailed description given hereinafter, and the accompanying drawings, which are given by way of illustration only, and thus not to be considered limiting.

### BRIEF DESCRIPTION OF THE DRAWINGS

FIG. 1A provides a system diagram for a computer software platform for a supply chain providing personalized user experiences, according to an aspect of the present disclosure.
FIG. 1B provides a system diagram for a computing device used in connection with the computer software platform for a supply chain providing personalized user experiences, according to an aspect of the present disclosure.
FIG. 1C provides a diagram for an example database structure, according to an aspect of the present disclosure.
FIG. 2 provides a flowchart depicting the structure of an active profile that may be used in connection with a computer software platform for a supply chain providing personalized user experiences, according to an aspect of the present disclosure.
FIG. 3 provides a flowchart depicting the structure used in connection with a computer software platform for a supply chain providing personalized user experiences, according to an aspect of the present disclosure.
FIG. 4A provides a flowchart depicting the multiple supplier structure of the computer software platform for a supply chain providing personalized user experiences, according to an aspect of the present disclosure.
FIG. 4B provides a diagram depicting multiple supplier and customer structures compatible with the computer software platform for a supply chain providing personalized user experiences, according to an aspect of the present disclosure.
FIG. 4C provides a diagram depicting catalog configurations in connection with the computer software platform for a supply chain providing personalized user experiences, according to an aspect of the present disclosure.
FIG. 4D provides a diagram depicting multiple supplier and customer structures compatible with the computer software platform for a supply chain providing personalized user experiences, according to an aspect of the present disclosure.
FIG. 5A illustrates an example of the personalized user experience provided by the computer software platform, according to an aspect of the present disclosure.
FIG. 5B illustrates an example of the personalized user experience provided by the computer software platform, according to an aspect of the present disclosure.
FIG. 5C illustrates an example of the personalized user experience provided by the computer software platform, according to an aspect of the present disclosure.
FIG. 5D illustrates an example of the personalized user experience provided by the computer software platform, according to an aspect of the present disclosure.
FIG. 5E illustrates an example of the personalized user experience provided by the computer software platform, according to an aspect of the present disclosure.
FIG. 5F illustrates an example of the personalized user experience provided by the computer software platform, according to an aspect of the present disclosure.
FIG. 5G illustrates an example of the personalized user experience provided by the computer software platform, according to an aspect of the present disclosure.
FIG. 5H illustrates an example of the personalized user experience provided by the computer software platform, according to an aspect of the present disclosure.
FIG. 6A illustrates an example of the personalized user experience provided by the computer software platform, according to an aspect of the present disclosure.
FIG. 6B illustrates an example of the personalized user experience provided by the computer software platform, according to an aspect of the present disclosure.
FIG. 6C illustrates an example of the personalized user experience provided by the computer software platform, according to an aspect of the present disclosure.
FIG. 6D illustrates an example of the personalized user experience provided by the computer software platform, according to an aspect of the present disclosure.
FIG. 6E illustrates an example of the personalized user experience provided by the computer software platform, according to an aspect of the present disclosure.
FIG. 6F illustrates an example of the personalized user experience provided by the computer software platform, according to an aspect of the present disclosure.
FIG. 6G illustrates an example of the personalized user experience provided by the computer software platform, according to an aspect of the present disclosure.
FIG. 7 illustrates an example of a webpage in accordance with the computer software platform for a supply chain providing personalized user experiences, according to an aspect of the present disclosure.
FIG. 8A illustrates an example of a template and/or user interface process for incorporating catalog information into the computer software platform for a supply chain, according to an aspect of the present disclosure.
FIG. 8B illustrates an example of a template and/or user interface process for incorporating catalog information into the computer software platform for a supply chain, according to an aspect of the present disclosure.
FIG. 8C illustrates an example of a template and/or user interface process for incorporating catalog information into the computer software platform for a supply chain, according to an aspect of the present disclosure.
FIG. 8D illustrates an example of a template and/or user interface process for incorporating catalog information into the computer software platform for a supply chain, according to an aspect of the present disclosure.
FIG. 8E illustrates an example of a template and/or user interface process for incorporating catalog information into the computer software platform for a supply chain, according to an aspect of the present disclosure.
FIG. 8F illustrates an example of a template and/or user interface process for incorporating catalog information into the computer software platform for a supply chain, according to an aspect of the present disclosure.
FIG. 9A illustrates an example of a personalized portal provided to an administrator for entering program manager or supplier information in the computer software platform for a supply chain, according to an aspect of the present disclosure.
FIG. 9B illustrates an example of a personalized portal provided to an administrator for entering program manager or supplier information in the computer software platform for a supply chain, according to an aspect of the present disclosure.
FIG. 9C illustrates an example of a personalized portal provided to an administrator for entering program manager or supplier information in the computer software platform for a supply chain, according to an aspect of the present disclosure.
FIG. 9D illustrates an example of a personalized portal provided to an administrator for entering program manager or supplier information in the computer software platform for a supply chain, according to an aspect of the present disclosure.
FIG. 10 illustrates an example of a personalized portal provided to an administrator and/or program manager for entering customer information in the computer software platform for a supply chain, according to an aspect of the present disclosure.
FIG. 11A illustrates an example of a personalized portal provided to an administrator and/or program manager in connection with the computer software platform for a supply chain, according to an aspect of the present disclosure.
FIG. 11B illustrates an example of a web page for a personalized portal provided to an administrator and/or program manager in connection with the computer software platform for a supply chain, according to an aspect of the present disclosure.
FIG. 11C illustrates an example of a web page for a personalized portal provided to an administrator and/or program manager in connection with the computer software platform for a supply chain, according to an aspect of the present disclosure.
FIG. 12A illustrates a first configuration for a supply chain in connection with the computer software platform for a supply chain, according to an aspect of the present disclosure.
FIG. 12B illustrates a second configuration for a supply chain in connection with the computer software platform for a supply chain, according to an aspect of the present disclosure.
FIG. 12C illustrates a third configuration for a supply chain in connection with the computer software platform for a supply chain, according to an aspect of the present disclosure.
FIG. 12D illustrates a fourth configuration for a supply chain in connection with the computer software platform for a supply chain, according to an aspect of the present disclosure.
FIG. 13 illustrates a flow chart for a quote request process in connection with the computer software platform for a supply chain, according to an aspect of the present disclosure.
FIG. 14 illustrates a flow chart for assigning a new user in connection with the computer software platform for a supply chain, according to an aspect of the present disclosure.
FIG. 15 illustrates a flow diagram for user messaging in connection with the computer software platform for a supply chain, according to an aspect of the present disclosure.
FIG. 16 illustrates a flow diagram for tax services provided by an example computer software platform for a supply chain, according to an aspect of the present disclosure.

### DETAILED DESCRIPTION OF THE DRAWINGS

In one embodiment, the present disclosure provides a computer software platform for supply chains used to conduct transactions including, for example, those involved in distributing and obtaining components for original equipment manufacturers (OEMs). Companies and individuals involved in such a transaction may include distributors, suppliers, and/or customers.

In one embodiment, the present disclosure provides a computer software platform that allows for the personalization of software to serve the needs of the particular business or client. Examples of personalization may include aspects of branding, items available in the supply chain, pricing for items available in the supply chain and the like. Landing pages, background colors for buttons, menus, hyperlinks, home page banners, icons, logos, and the like may be personalized.

The computer software platform for supply chains described herein provides personalized user experiences for multiple suppliers with a single logon. Additionally, the computer software platform for supply chains described herein has the additional ability to add new suppliers and users quickly and efficiently without requiring further specialized computer services to be implemented by each supplier or user.

Various reasons exist for why suppliers and/or customers want personalized user experiences within a computer software platform for supply chains. In a first example, a supplier may wish to control access to certain products, pricing, and services to specific customers. Additionally, a customer and a supplier may want the computer software platform for supply chains to display prices that are pre-negotiated. In another example, a company with sensitive intellectual property may need to control licensee access and offer licensee-specific products and pricing. In one embodiment of the computer software platform for supply chains described herein, a company may create a various permission levels for licensees and the platform may provide personalized portals for the licensees.

In yet another example, users of conventional computer software platforms for supply chains may include original equipment manufacturers (OEMs). When OEMs sell sample products they may be required to control access to the sample products. For example, the OEMs may need to confirm that customers have consented to a non-disclosure agreement (NDA) before viewing the sample products and/or processing an order request. In one embodiment, the computer software platform for supply chains described herein may provide access to a listing of sample products on the computer software platform only after confirmation of a valid NDA.

In another example, large global OEMs may be in a position where regional departments work with regional quotation teams, thus creating a need for a centralized quote management system. In one embodiment of the computer software platform for supply chains, the computer software platform may be personalized so that regional quotation teams may request quotes that are approved or rejected by centralized teams. The approved quotations may then be presented to the customer.

In one embodiment, the computer software platform for supply chains of the present disclosure may provide a front-end e-commerce website that provides customized information to individual original equipment manufacturers (OEMs). Furthermore, in one embodiment the system may provide customized information to the OEMs, receive one or more orders related to the OEMs, and provide a mechanism for order fulfillment.

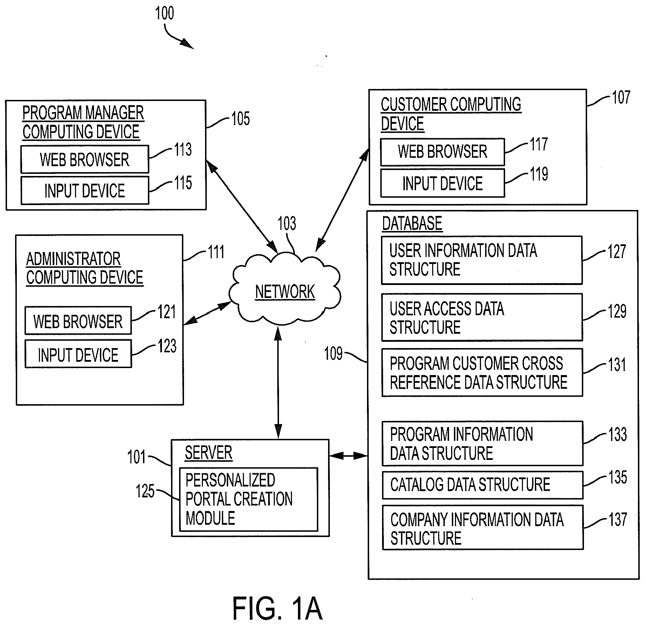

FIG. 1A provides a system diagram for a computer software platform for supply chains that provides personalized user experiences. As illustrated the system 100 may include one or more servers 101, one or more program manager computing devices 105, one or more customer computing devices 107, and one or more administrator computing devices 111. In the description herein, the term program manager may be used interchangeably with supplier and brand owner. In one embodiment, the components of the system 100 may be communicatively coupled via at least one network 103. The server 101 may also be communicatively coupled to a database 109.

Each of the one or more program manager computing devices 105, customer computing devices 107, and/or administrator computing devices 111 may include a web browser 113, 117, 121 and input device 115, 119, 123. The web browser 113, 117, 121 may be configured to display the computer software platform for supply chains that provide a personalized user experience described herein. Data and information may be input by a user such as a program manager, customer, and administrator into the input device 115, 119, 123, and then transmitted from each of the program manager computing device 105, customer device 107 and/or administrator device 111 to server 101. The server 101 may then update the database 109, and/or personalized user experience portal via the personalized portal creation module 125.

In one embodiment, the server 101 may include one or more processors, or microprocessors coupled to one or more non-transitory memory devices, and may be adapted to perform the functions described herein. Server 101 may be any special-purpose machine capable of storing and executing a set of computer-readable instructions (e.g., software) that specify actions to be taken to perform the functions described herein. Alternatively, the server 101 may be a specialized component specifically designed to optimize the relationships set forth herein. Further, while only a single server 101 is illustrated, the term "server" shall also be taken to include any collection of machines that individually or jointly execute a set (or multiple sets) of instructions to perform any one or more of the methodologies discussed herein. In some examples, at least two of the multiple servers may be in different physical locations.

The server 101 is one example of computer-readable storage medium. The term "computer-readable storage medium" should be taken to include a single medium or multiple media that store one or more sets of instructions. The term "computer-readable storage medium" shall also be taken to include any medium that is capable of storing or encoding a set of instructions for execution by the machine and that causes the machine to perform any one or more the methodologies of the present disclosure.

The server 101 may be configured to manage a component database 109 storing data and information related to the supply chain. In one embodiment, the component database 109 may include one or more data structures storing information regarding the pricing of components associated with the supply chain, user authorization and permissions for users associated with the supply chain, and the fulfillment of orders placed using software platform for the supply chain. Permissions for users may be determined by an access gateway. The server 101 may include a personalized portal creation module 125 configured to construct a webpage based on information obtained from the database 109. The webpage may then be accessed by the program manager computing device 105, the administrator computing device 111, and/or the customer computing device 107 via their respective web browsers 113, 117, 121. The term webpage is used interchangeably with the term website which may include one or more webpages.

In one embodiment, data and information may be retrieved by the server 101 from the database 109 using a representational state transfer application programming interface (RESTful API) which retrieves information that is in a computer language, such as, for example,

JavaScript®, and in a data-interchange format, such as, for example a JavaScript® Object Notation (JSON) object. The JSON object may then be converted into a TypeScript object by the server. The TypeScript object may then be used in the personalized portals viewed by the web browsers 113, 117, 121. In one embodiment the conversion from the JSON object to the TypeScript object may be by way of the personalized portal creation module 125 on the server 101. Data and information retrieved from the database 109 may be based on user profiles as will be discussed herein.

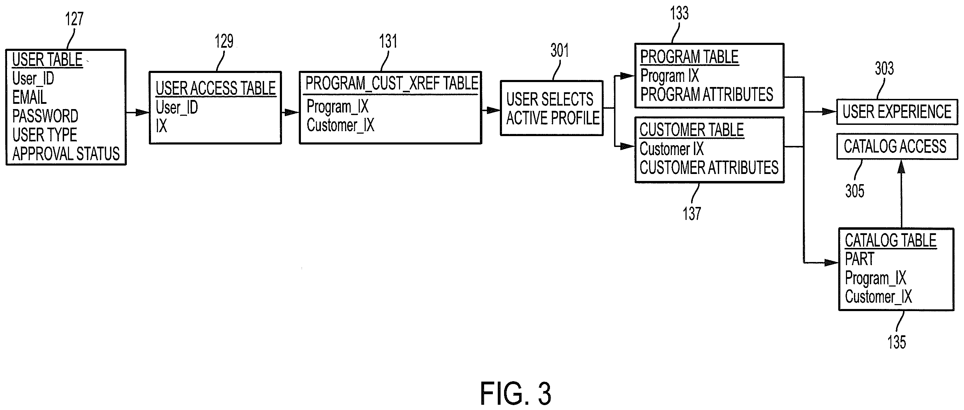

In one embodiment the database 109 may store information related to each of the users of the computer software platform for supply chain. This may include user identification information, user email, user password, user type (i.e., customer, administrator, program manager), and user approval status. In one embodiment, the user information may be encrypted before being stored in the database 109. The database 109 may also store information on what customers and/or programs a particular user is authorized to access. The database 109 may also store a catalog that contains a listing of items and their associated information. The database 109 may include program specific web page fragments and images including hypertext markup language (HTML) based code for web page fragments and portable network graphics (PNG), JPG, GIF files for images and the like. The information stored in the database 109 may be used to construct a webpage using a Rich Internet Application (RIA) by the personalized portal creation module 125. As will be discussed in connection with FIG. 3, the database 109 may include one or more data structures including, for example, a user information data structure 127, the user access data structure 129, the program customer cross reference data structure 131, the program information data structure 133, the catalog data structure 135 and the customer information data structure 137. The data and information stored in the database 109 may be configured in any suitable format and organized in one or more suitable data structure(s).

Data and information stored in the database 109 may be provided to the server 101 by one or more of the program manager computing device 105, administrator computing device 111, and/or the customer computing device 107 via their respective web browsers 113, 117, 121, a template upload, and/or by direct electronic information exchange. The data and information received by the server 101 may be processed at the server 101 and then stored at database 109. Processing may include filtering, encryption, formatting and the like.

In one embodiment, catalog information may be incorporated into the catalog data structure 135 by a template and/or user interface by an administrator and/or program manager. In one embodiment, an administrator may be permissioned to enter and/or manage information related to all the items in the catalog data structure 135. In one embodiment, a program manager may be permissioned to enter and/or manage information related to only the items in the catalog data structure 135 associated with the programs and/or customers with whom the program manager is associated.

In one embodiment, the program manager or administrator may enter item information into the catalog data structure 135 by use of a template.

In one embodiment, the program manager or administrator may enter item information via the user interface provided by the web browser on the respective program manager computing device and administrator computing device.

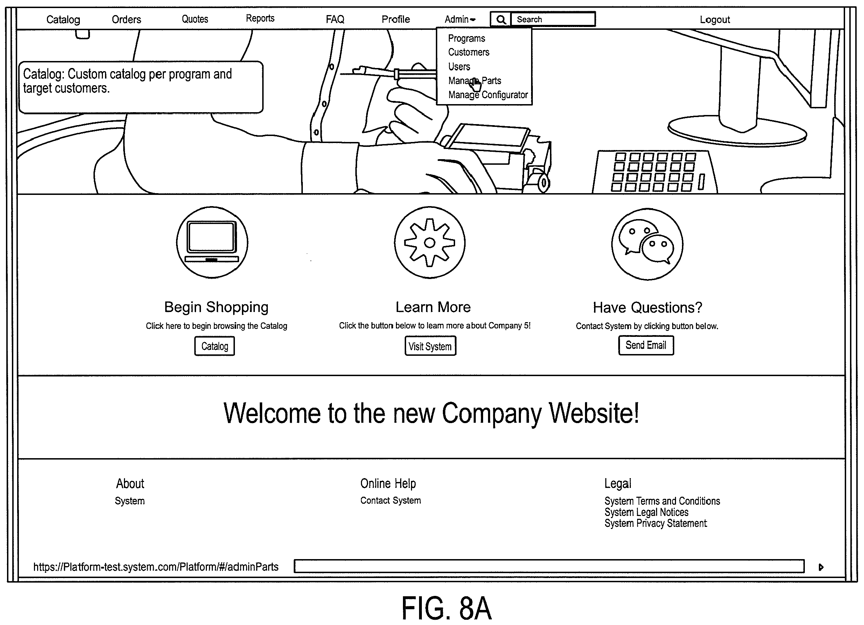

The template and user interface processes for incorporating catalog information into the catalog data structure 135 are described below in relation to FIGS. 8A- 8F.

Catalog information corresponding to the items available for purchase to one or more customers of the computer software program for supply chain may be uploaded into the database 109 and more particularly into the catalog data structure 135. Because certain items may be available for purchase by a select few customers of the computer software program, the catalog information may include information on permissions for viewing items (as determined by an access gateway). For example, in one embodiment, each item in the catalog data structure 135 may be specified as either a program level item or a customer level item. A program level item may refer to an item that is visible across all customers associated with the program. The items will be presented to all the customers with the same attributes. A customer level item may refer to an item that may be visible only to particular customer or items that may be presented to each customer with different attributes. For example, a customer level item may be assigned a different price for each customer.

In one embodiment, three related database sub-structures may be a part of the catalog data structure 135 of database 109, namely, a parts data sub-structure, a part program detail data sub-structure, and a part customer detail data sub-structure. The parts data sub-structure may include data and information related to the part including part identifying information, an image, manufacturer information, short description, long description, category, lead time, minimum order quantity (MOQ), order multiple quantity, weight, export control classification number (ECCN), and seller of record. For program level items a record for the item will exist in both the parts data sub-structure and the part program detail data sub-structure. For customer level items, a record for the item will exist in both the parts data sub-structure and the part customer detail data sub-structure.

Some or all records in the part program detail data sub-structure may include data and information, including: part-identifying information, program-identifying information, program part-identifying information, program-level part designation, customer part numbers, price, and credit care eligibility information. The program level part designation may designate whether or not the part is used by all the customers in the program.

The part customer detail data sub-structure may include data and information, including: customer-identifying information, program-identifying information, customer part numbers, price, and credit card eligibility. A separate record within the part customer detail data sub-structure may be used for each customer, depending on the program level part designation. For example, if the program level part designation defines that the part is not used by all customers in the program, a separate record may be created for each customer and stored in the part customer detail data sub-structure.

Having three related database sub-structures may allow for less database maintenance and reduced record volume when items or parts are shared across multiple catalogs while at the same time allowing for customization of what items or parts are visible to customers. However, more or less related database sub-structures may be used to either optimize computer performance, provide additional functionality, or address user needs.

Part level attributes that do not vary across customers may be stored in a part level attribute data structure stored within database 109. The part level attributes may include the Master Part Number, Manufacturer, Description, Lead time, minimum order quantity (MOQ), image, weight, export control classification number (ECCN), and Seller of Record. Information related to program level attributes, attributes that remain constant across all customers, may be stored within a program part data structure stored within database 109. The program part data structure assigns program level attributes such as Customer Specific Part Number, price and credit card eligibility. Each item in the catalog data structure 135 that is not specified as a program level item requires a corresponding record for each customer in a customer part data structure, which allows the customer specific part number, price and credit card eligibility to be set for each individual customer. The customer part data structure may be stored within database 109 and in one embodiment may be linked to or a sub-data structure of the catalog data structure 135.

A network 103 may be any plurality of completely or partially interconnected computers or computer components wherein some or all of the computers or components are able to communicate with one another. Connections may be wired in some cases (e.g., via wired TCP connection or other wired connection) or may be wireless (e.g., via a WiFi network connection). Any connection through which at least two computers or components may exchange data can be the basis of a network 103. Furthermore, separate networks 103 may be able to be communicatively coupled such that one or more computers or components within one network may communicate with one or more computers in another network 103. In such a case, the plurality of separate networks 103 may optionally be considered to be a single network. Network 103 may include, for example, a private network (e.g., a local area network (LAN), a wide area network (WAN), intranet, etc.) and/or a public network (e.g., the Internet). In one embodiment, one or more program manager computing devices 105, customer computing devices 107, administrator computing devices 111 and/or server 101 may be communicatively coupled via one or more networks 103.

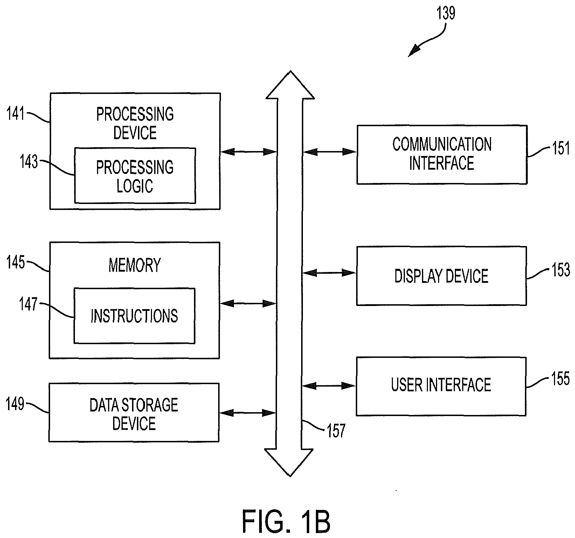

FIG. 1B illustrates a functional block diagram of a machine in the example form of computer system 139, within which a set of instructions for causing the machine to perform any one or more of the methodologies, processes or functions discussed herein may be executed. In some examples, the machine may be connected (e.g., networked) to other machines as described above. The machine may operate in the capacity of a server or a client machine in a client-server network environment, or as a peer machine in a peer-to-peer (or distributed) network environment. The machine may be any special-purpose machine capable of executing a set of instructions (sequential or otherwise) that specify actions to be taken by that machine for performing the functions describe herein. Further, while only a single machine is illustrated, the term "machine" shall also be taken to include any collection of machines that individually or jointly execute a set (or multiple sets) of instructions to perform any one or more of the methodologies discussed herein. In some examples, each of the program manager computing device 105, customer computing device 107, and administrator computing device 111 may be implemented by the example machine shown in FIG. 1B (or a combination of two or more of such machines).

Example computer system 139 may include processing device 141, memory 145, data storage device 149 and communication interface 151, which may communicate with each other via data and control bus 157. In some examples, computer system 139 may also include display device 153 and/or user interface 155.

Processing device 141 may include, without being limited to, a microprocessor, a central processing unit, an application specific integrated circuit (ASIC), a field programmable gate array (FPGA), a digital signal processor (DSP) and/or a network processor. Processing device 141 may be configured to execute processing logic 143 for performing the operations described herein. In general, processing device 141 may include any suitable special-purpose processing device specially programmed with processing logic 143 to perform the operations described herein.

Memory 145 may include, for example, without being limited to, at least one of a read-only memory (ROM), a random access memory (RAM), a flash memory, a dynamic RAM (DRAM) and a static RAM (SRAM), storing computer-readable instructions 147 executable by processing device 141. In general, memory 145 may include any suitable non-transitory computer readable storage medium storing computer-readable instructions 147 executable by processing device 141 for performing the operations described herein. Although one memory device 145 is illustrated in FIG. 1B, in some examples, computer system 139 may include two or more memory devices (e.g., dynamic memory and static memory).

Computer system 139 may include communication interface device 151, for direct communication with other computers (including wired and/or wireless communication), and/or for communication with network 103 (see FIG. 1A). In some examples, computer system 139 may include display device 153 (e.g., a liquid crystal display (LCD), a touch sensitive display, etc.). In some examples, computer system 139 may include user interface 155 (e.g., an alphanumeric input device, a cursor control device, etc.).

In some examples, computer system 139 may include data storage device 149 storing instructions (e.g., software) for performing any one or more of the functions described herein. Data storage device 149 may include any suitable non-transitory computer-readable storage medium, including, without being limited to, solid-state memories, optical media and magnetic media.

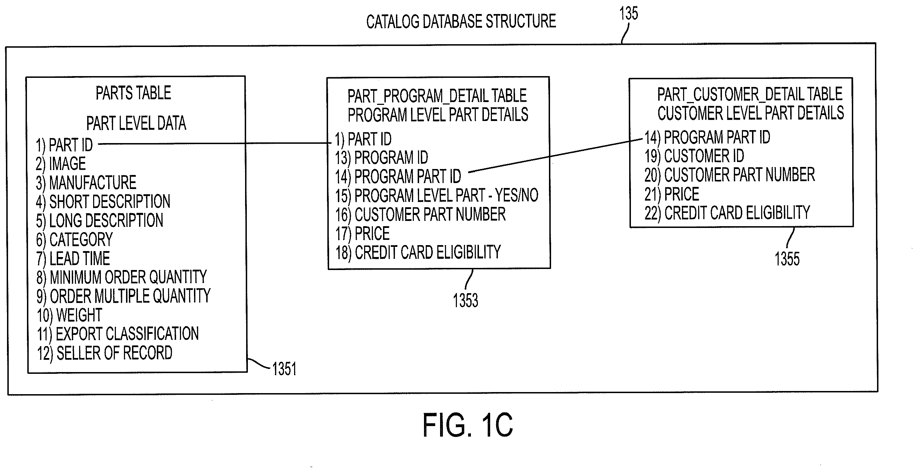

FIG. 1C illustrates an example catalog database structure 135 as depicted in FIG. 1A. As illustrated in FIG. 1C, a catalog database structure 135 may have a parts table 1351 configured to store part level data, a part program table 1353 configured to store program level part details, and a part customer detail table 1355 configured to store customer level part details. Although three separate table structures are illustrated in FIG. 1C, it is envisioned that fewer or greater table structures may be used.

As illustrated in FIG. 1C, the parts table 1351 may store part level data such as part identification information, part images, manufacture, short and long descriptions, part category, part lead time, minimum order quantity, order multiple quantity, weight, export classification, the seller of record, and the like.

The part program table 1353 may store program level part details such as part identification information, program identification information, program part identification information, program level part designations (yes/no), customer part numbers, price, credit card eligibility, and the like.

The part customer detail table 1355 may store customer level part details such as program part identification information, customer identification, customer part numbers, price, credit card eligibility, and the like.

As illustrated in FIG. 1C, one or components of the tables in the catalog database structure 135 may be linked. As illustrated the part identification information in the parts table 1351 may be linked to the part identification information in the part program detail table 1353. Similarly, the program part identification information in the part program detail table 1353 may be linked to the program part identification information in the part customer detail table 1355.

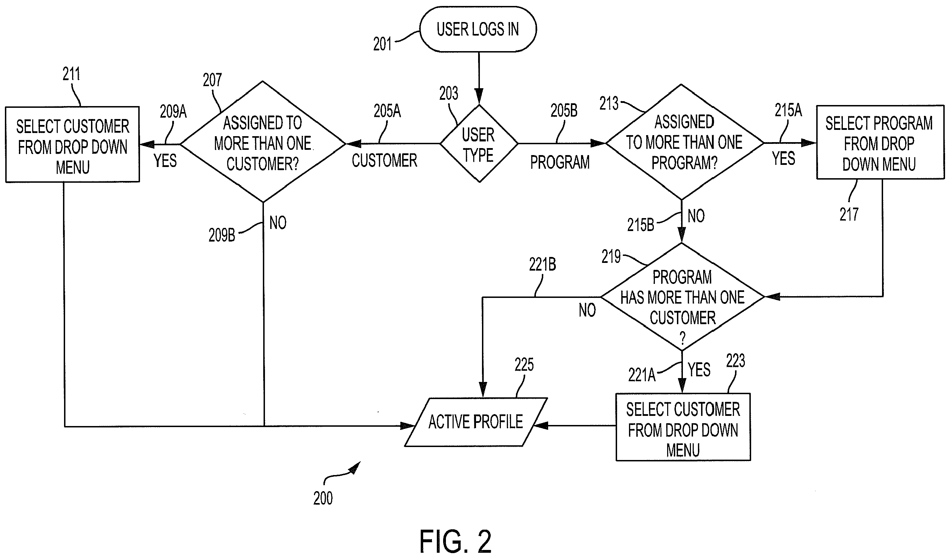

Advantageously, the improved computer software platform for supply chains described herein may include the ability to provide personalized user experiences. FIG. 2 provides a flowchart depicting a data and process organization structure 200 that may be used in connection with the improved computer software platform for supply chains described herein. In particular, FIG. 2 illustrates a flowchart for a data process and organization structure that provides personalized user experiences in accordance with an active profile.

A user may login at user login step 201 to the computer software platform for supply chains via a webpage, application, or the like. Once the user is logged in, the server 101 may determine the type of user that has logged in at a user type determination step 203. In one embodiment, types of users may include a customer or a program manager. If a determination is made that the user is a customer 205A, the server 101 may determine whether the customer is associated with more than one customer profile 207. In one embodiment, determining whether the customer is associated with more than one customer profile 207 may involve retrieving and analyzing information stored in the database 109. If it is determined that the customer is associated with more than one customer profile 209A the user may be provided with a list of profiles 211 via the computer software platform. In response to being provided with the list of profiles 211, the user may select a customer profile to use in constructing an active profile 225 which is then used to provide the personalized user experience within the computer software platform. Alternatively if it is determined that there is not more than one customer profile associated with the customer 209B, the single customer profile may be used to construct the active profile 225 which is used to provide the personalized user experience within the computers software platform.

If a determination is made that the user 203 is a program manager 205B, the server 101 may determine whether the program manager is associated with more than one program profile 213. In one embodiment, determining whether the program manager is associated with more than one program profile 213 may involve retrieving and analyzing information stored in the database 109. If it is determined that the program manager is associated with more than one program profile 215A, the user may be provided with a list of program profiles 217 via the computer software platform, upon which the user may select a program profile 217 to use in constructing a personalized user experience within the computer software platform.

In one embodiment, if the user is not associated with more than one program profile 215B or the user has already selected the program profile they wish to use 217, the server 101 may then determine whether the program profile is associated with more than one customer 219. If the program profile is associated with more than one customer 221A, the user may then be presented with a list of customers 223, upon which the user may select a customer. Alternatively, if the program profile is not associated with more than one customer 221B, or once the user has selected a customer 223, the combined program profile and customer profile may be used to construct the active profile 225, which is used to provide the personalized user experience within the computer software platform. In one embodiment, the user may make selections using a dropdown menu, selection boxes, toggles, or the like via one or more webpages displayed on a user device.

A customer profile may include information related to one or more customer attributes. Customer attributes may include reporting information, catalog information, order history visibility, quote history visibility, terms and conditions, and the like.

A program manager profile may include information related to one or more program manager attributes. Program manager attributes may include branding, look and feel, currency, frequently asked questions, inventory, terms and conditions, incoterm, freight, workflow email routing and the like. In one embodiment the program manager attributes may be separate and distinct from the customer profile attributes.

Information from the selected program profile and/or the selected customer profile may be combined to form a personalized active profile 225. The personalized active profile 225 may provide a unique personalized user experience to the user of the computer software platform for supply chains.

For example, in one embodiment, the processes described in the data and process organization structure 200 may correspond with one or more data retrieval and processing steps 300 illustrated in FIG. 3. As depicted, data may be retrieved from the database 109 by server 101 and processed. For example, the user login step 201, and/or user type determination step 203 may correspond to retrieval of information from a user information data structure 127 and/or a user access data structure 129. The user information data structure 127 may include encrypted user data. The user access data structure 129 may define the programs and customers the user has access to. Similarly, the determination that a program is associated with more than one customer 219 may correspond to retrieving information defining program and customer relationships 131 that are stored in a program customer cross reference data structure 131 of the database 109. Additionally, the creation of an active profile 225 may be based upon the User Type, User Access and Program/Customer Relationships 301, which may involve a program information data structure 133 and/or a customer information data structure 137 both of which may be stored in a database 109. In one embodiment, the data and information stored in the program information data structure 133 and/or the customer information data structure 137 may be used to determine the user experience 303. Additionally, the data and information stored in the program information data structure 133 and/or the customer information data structure 137 may determine the portion of the catalog data structure 135 the user is permissioned to access 305.

The active profile may determine the program specific web page fragments and images stored in the database 109 used to create the personalized user experience portal for the user vis the personalized portal creation module 125 of server 101. For example, the web page fragments and images may include customized branding and content. In this manner, users may experience user specific content and buying experiences. Furthermore, the as the user may only see a catalog table or portion of the catalog table that they are provided access to, specific catalog items can be proportioned and made available only to a controlled audience.

In one embodiment, the active profile design allows a user to change their personalized user experience portal by selecting a different customer and/or program profile. Advantageously, this may be done without having to use multiple user accounts and email addresses, which would require logging out, and then back in, with different credentials.

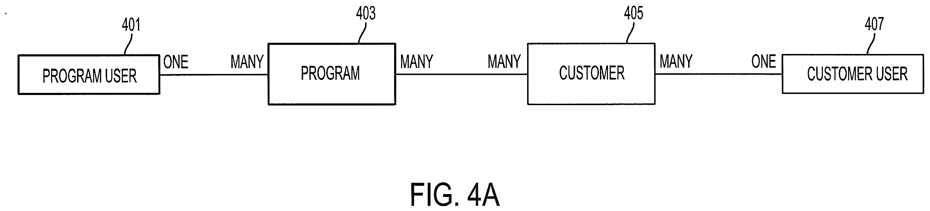

Accordingly, the improved computer software platform for a supply chain described herein may include the ability for a user via a single sign-on to select between multiple environments or user experiences as is illustrated in FIG. 4A. As discussed above, each environment or user experience is constructed from a combination of a customer profile and a program profile. In accordance with the computer software platform for a supply chain described herein, each program user 401 may be associated with many programs 403. Likewise, each customer user 407 may also be associated with many customer profiles 405. As the combination of customer profiles 405 and program profiles 403 provides the active profile for the environment or user experience, each program user may select between various experiences based on their customer of interest, and each customer user may select between various experiences based on their program of interest.

As discussed above in connection with FIGS. 3 and 4A, a user's selection of a customer and/or program manager profile may be used to construct an active profile that may then be used by the server 101 to construct a personalized user experience portal via the personalized portal creation module 125. The personalized portal creation module 125 accesses information corresponding to the active profile from database 109 in order to create a website having one or more webpages that are personalized to and correspond to the selected active profile.

For example, in one embodiment, a single customer who would like to acquire one or more items may use the improved computer software platform for a supply chain to view information regarding the one or more items as presented by various suppliers. The improved computer software platform may allow the single customer to view catalog information across a variety of suppliers by selecting various active profiles. Upon selecting a different active profile corresponding to a different supplier, the website may update with information for the selected supplier automatically. Similarly, a single supplier may use the improved computer software platform to create personalized offerings to various customers where each customer may receive unique pricing.

In one embodiment, a supplier, also referred to herein as a seller, brand owner, and/or program manager, may upload information to the database 109 including html fragments, images, text, video, and the like, so that the server 101 can construct a website that is configured to look and feel as though a customer is accessing a website offered by the supplier rather than one that is hosted by the administrator. In one embodiment, the supplier may be provided with a template having options to construct a website. The supplier would complete the template by choosing features and uploading content to customize the website to the supplier's business, including look and feel. In so doing, the website will be quickly created, and already be in a format compatible with the improved computer software platform. The website will be compatible as, for example, in a default configuration provided by the software platform, or an offered optional variation readily available and provided through a template system.

In one embodiment, a customer may access the website in order to view a catalog of products or items that are being sold by the supplier. Customers may share a common catalog or have access to their own catalog of products and prices for each supplier they are associated with. A single user may be assigned to one or more customer profiles, which allow a user to have access to multiple catalogs from multiple suppliers.

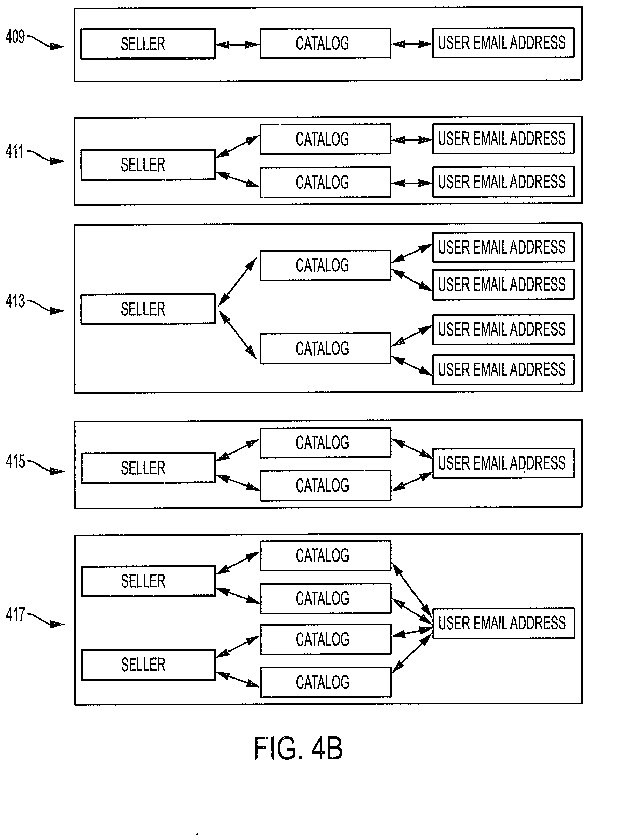

As illustrated in FIG. 4B, the systems and methods described herein may support a first scenario 409, where a single seller may be associated with a single catalog that is available to a single user email address. The systems and methods described herein may also support a second scenario 411, where a single seller is associated with two separate catalogs each corresponding to a particular email address. The systems and methods described herein may also support a third scenario 413, where a single seller is associated with two separate catalogs each corresponding to two email addresses. The systems and methods described herein may also support a fourth scenario 415, where a single seller is associated with two separate catalogs each corresponding to the same email address. The systems and methods described herein may also support a fifth scenario 417, where two sellers are each associated with two separate catalogs, however each of the catalogs may be accessed by the same user email address.

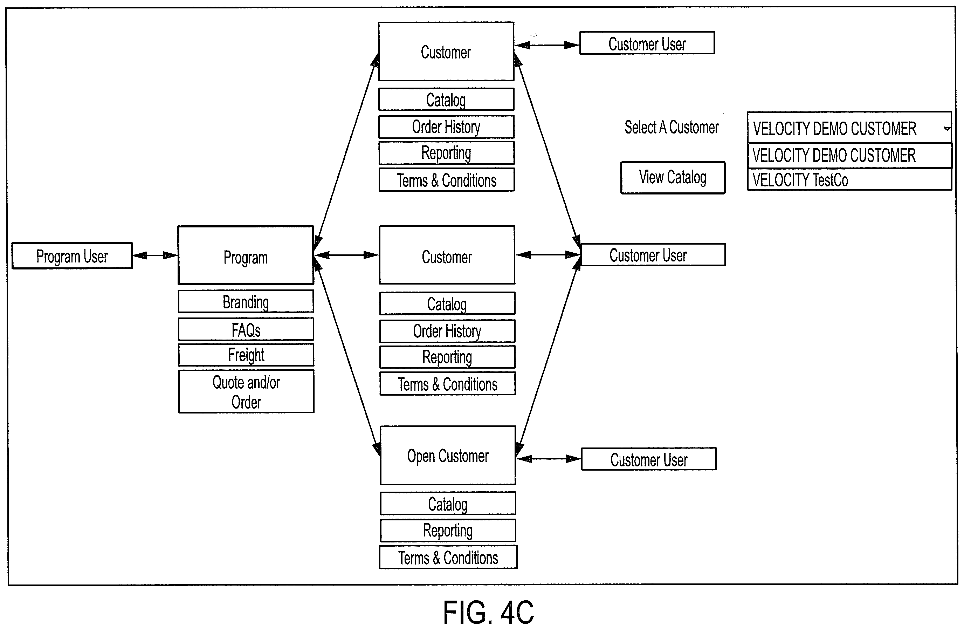

As illustrated in FIG. 4C, a catalog may be viewed based on an active profile that is a composition of a program profile and a customer profile. As illustrated a program user may be associated with a program having a particular set of branding, FAQs, freight configurations and quote and/or order configurations. And customers may be associated with their own customer configurations having a particular set of catalog configurations, order history, reporting configurations and terms and conditions.

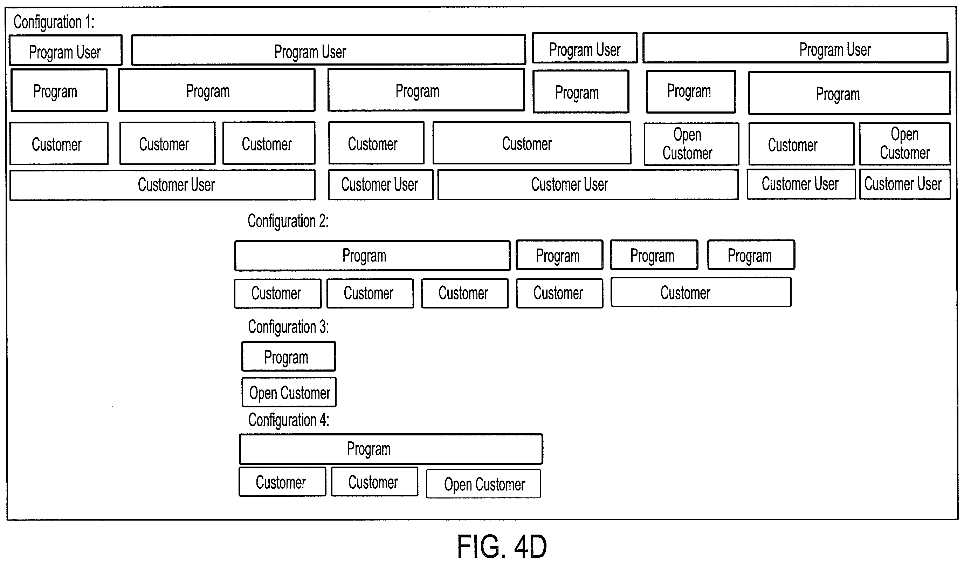

As illustrated in FIG. 4D, the systems and methods described herein may support both open and closed environments. As depicted a program user may be associated with various programs that can interact with various customers that can be associated with multiple customer users.

In one embodiment, multiple suppliers can offer one or more catalogs to approved customers. Customers may be able to switch between catalogs from the same supplier as well as catalogs offered from different suppliers. When switching between suppliers, in one embodiment, the personalized portal's look, feel, and content may also update to represent the supplier.

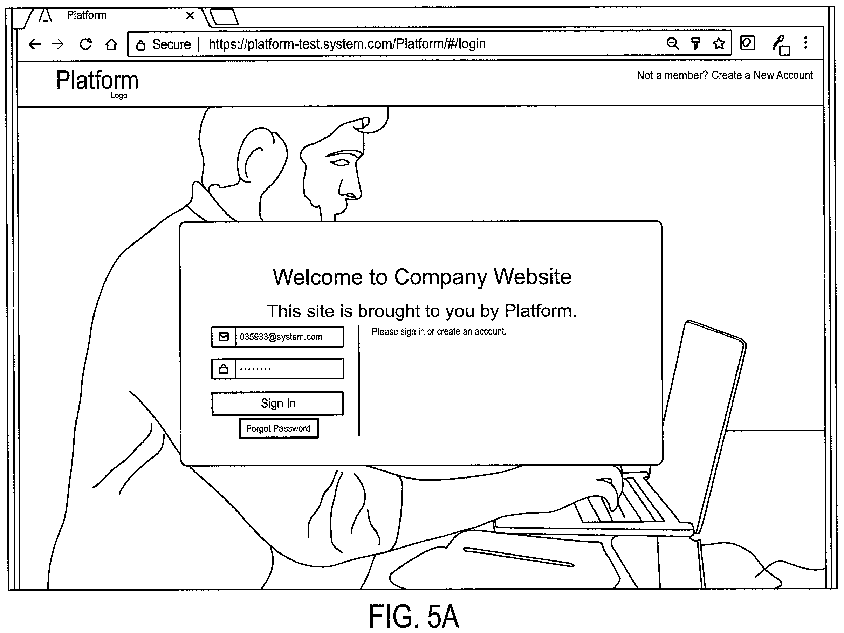

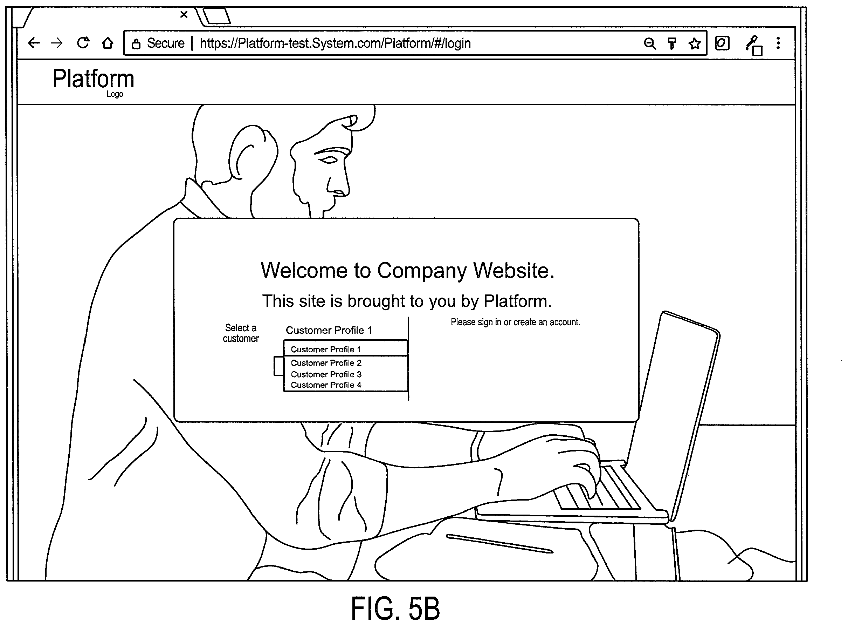

FIGS. 5A-5H illustrate an example of how a customer may view a catalog for various suppliers after a single login. For example, as illustrated in FIG. 5A, a customer may login to a distributor website using a username (e.g., email address) and password by way of the access gateway. In one embodiment, this webpage has the look and feel of a distributor. Upon signing in, a customer may be prompted to select a customer profile associated with the username as is illustrated in FIG. 5B. In another embodiment, this may show various supplier company names associated with a customer. In one embodiment, this webpage has the look and feel of a distributor. An access gateway may be configured to determine whether the user is permissioned to access data stored in the database.

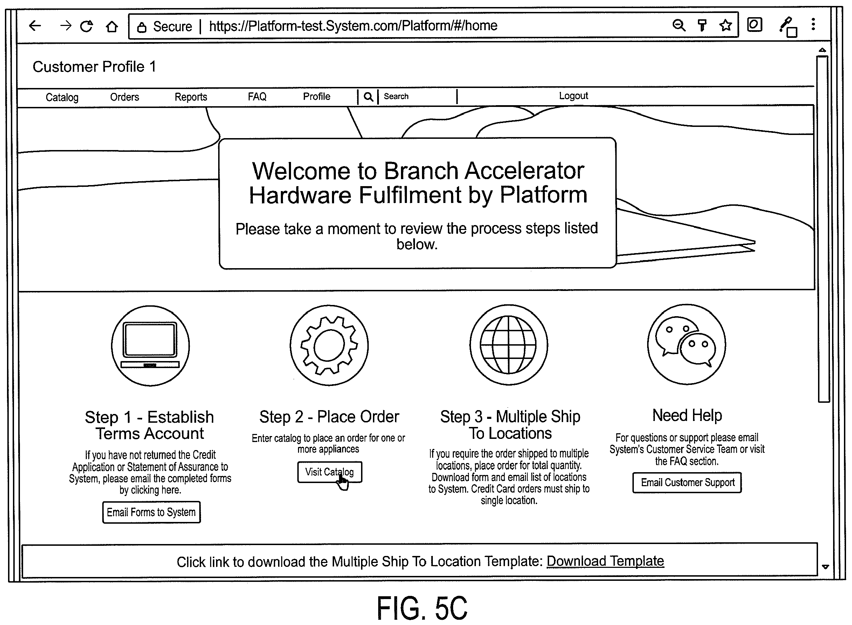

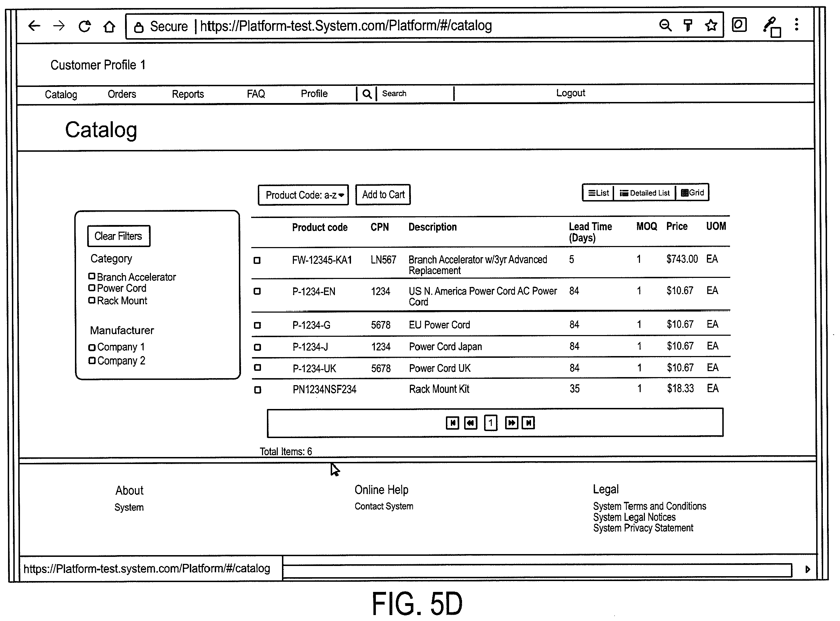

As illustrated in FIG. 5C, the customer may then be routed to a personalized portal associated with the selected customer profile. In one embodiment, this webpage has the look and feel of a first supplier associated with the customer. For example, the webpage may include the first supplier branding, logos, or colors. The customer may then elect to view catalog information and be routed to a webpage that displays catalog information specific to the customer for the first supplier, as is illustrated in FIG. 5D. In one embodiment, this webpage has the look and feel of the first supplier associated with the customer. For example, the webpage may include the first supplier branding, logos, or colors.

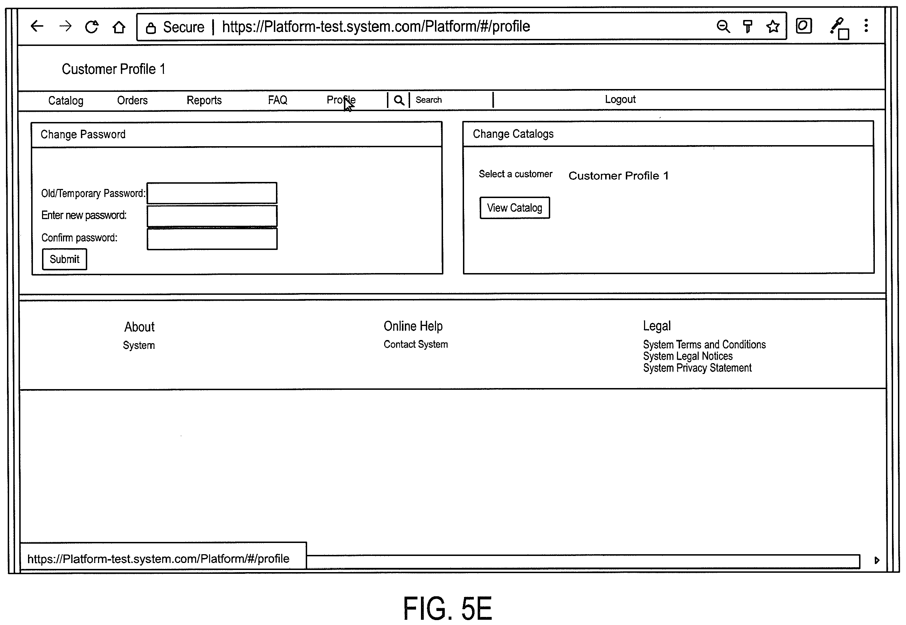

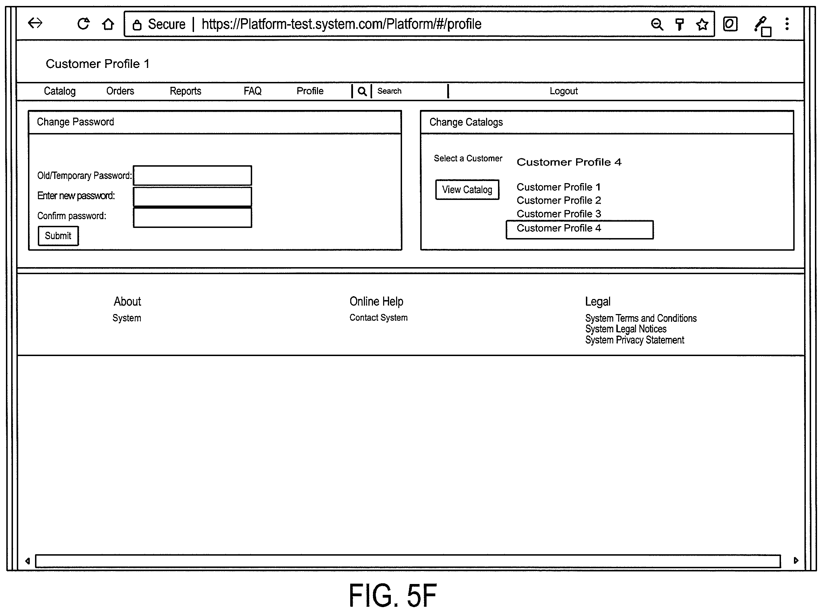

The customer may change the catalog they are viewing by selecting a different customer profile as is illustrated in FIG. 5E. As shown in FIG. 5F, the customer may select a new customer profile using a drop down menu. In another embodiment, this may show various supplier company names associated with a customer. In one embodiment, this webpage has the look and feel of a distributor. In another embodiment, this webpage may retain the look and feel of the first supplier, which is currently associated with the user.

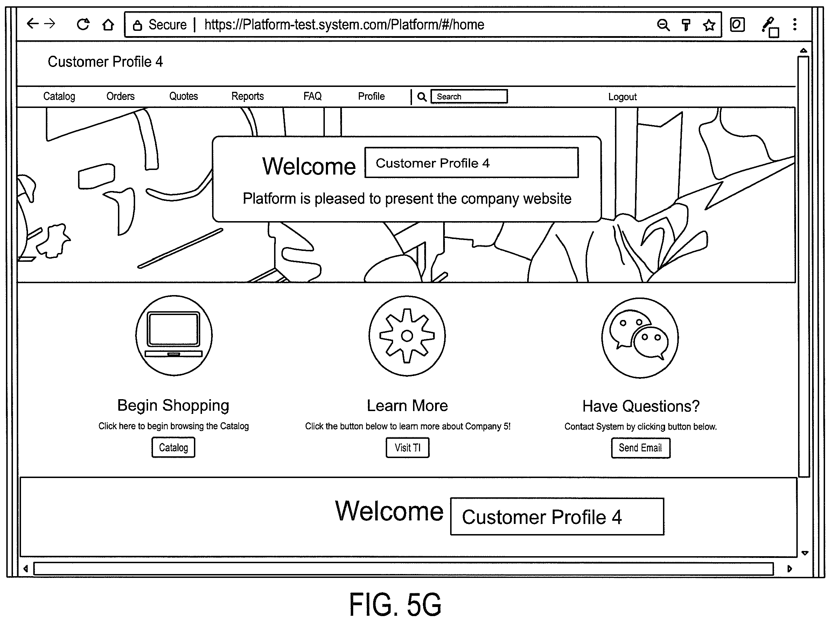

Once a new customer profile is selected, the customer may be routed to a website that is personalized to the selected customer profile as is illustrated in FIG. 5G. In one embodiment, this webpage has the look and feel of a second supplier associated with the customer. For example, the webpage may include the second supplier branding, logos, or colors. As may be appreciated, countless suppliers may be associated with the distributor, each having its own look and feel for use with customers.

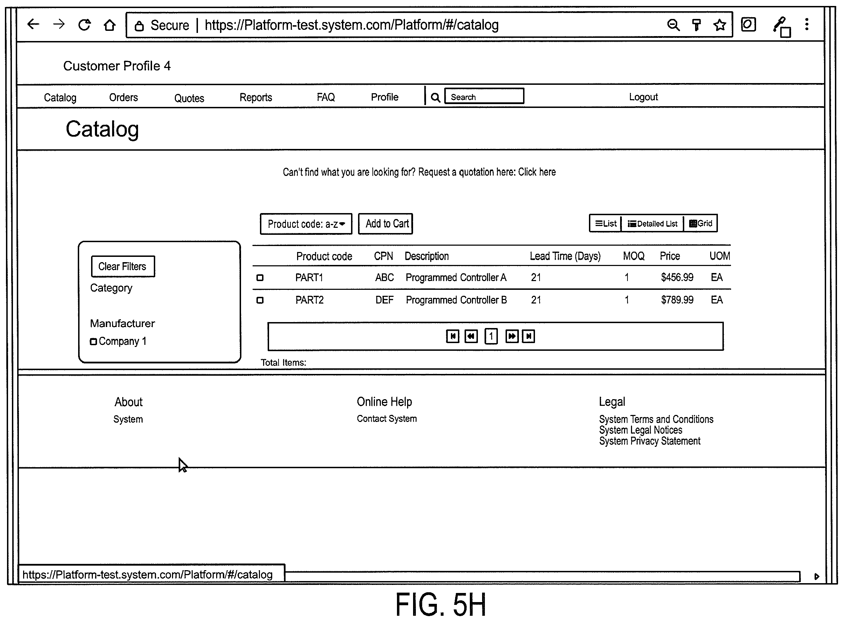

As shown in FIGS. 5C and 5G, the customer profile page for a first customer profile, Customer Profile 1, may differ from that for a second customer profile, Customer Profile 4. Additionally, the catalog associated with the first customer profile (see FIG. 5D) may differ from that for the second customer profile illustrated in FIG. 5H. As shown above, these webpages may comprise the look and feel of each supplier associated with the customer, when the customer has chosen to view information for the specific supplier on the distributor website. In one embodiment, there is no brand content on supplier websites for the distributor. In another embodiment, the distributor branding is at the end (or bottom) of the webpage. In another embodiment, the distributor branding is placed adjacent to, or near, the supplier branding.

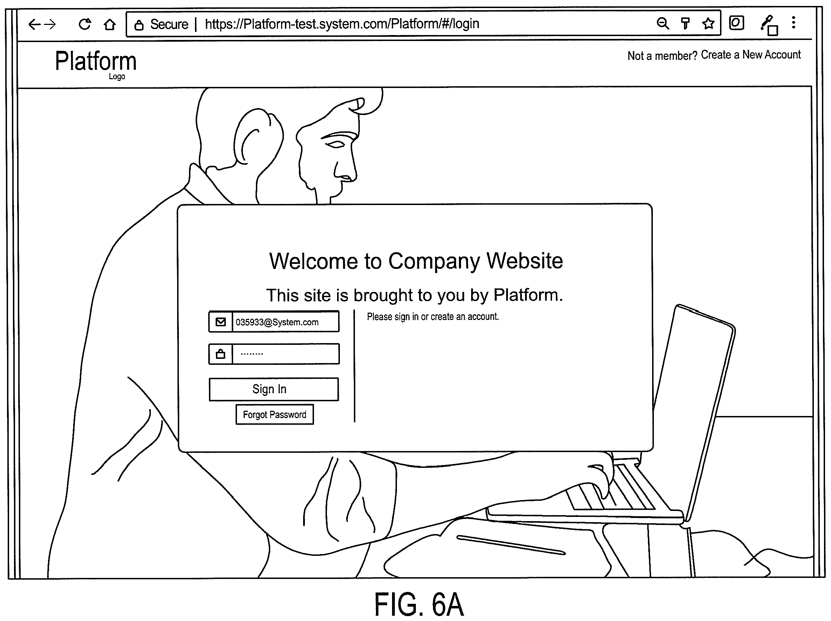

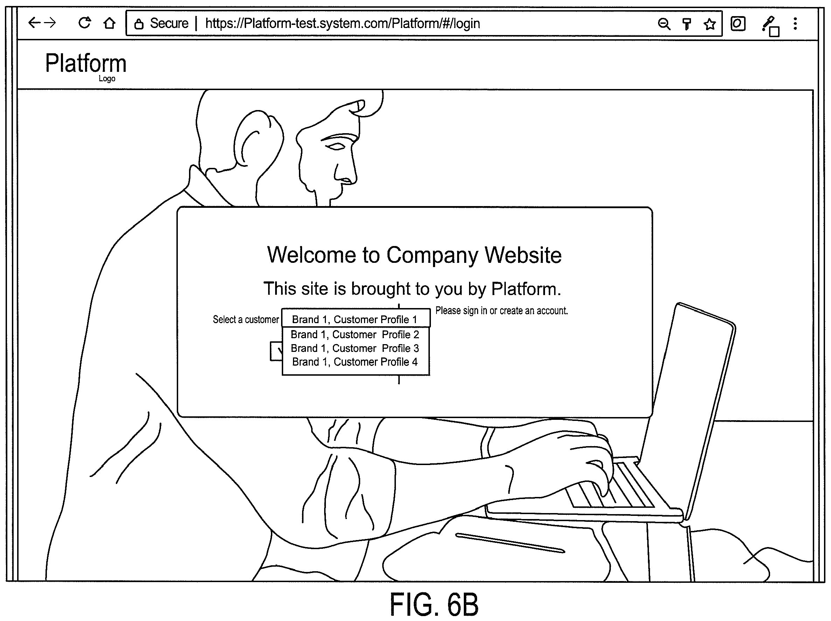

FIGS. 6A-6G illustrate an example of how two different customer profiles for the same customer may be associated with different catalogs for the same supplier. For example, as illustrated in FIG. 6A, a customer may login to a website using a username (e.g., email address) and password. In one embodiment, this webpage has the look and feel of a distributor. Upon signing in, a customer may be prompted to select a customer profile associated with the username as is illustrated in FIG. 6B. In one embodiment, this webpage has the look and feel of a distributor.

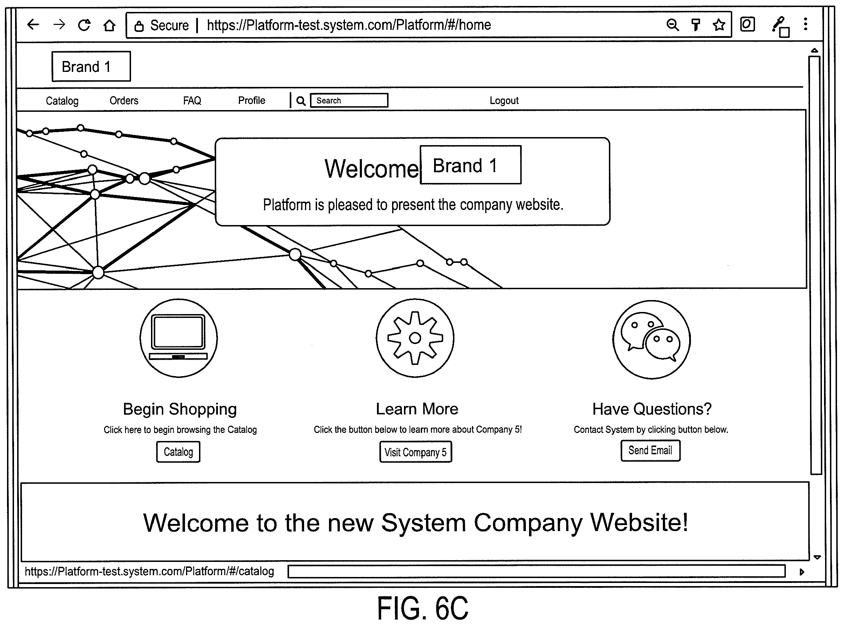

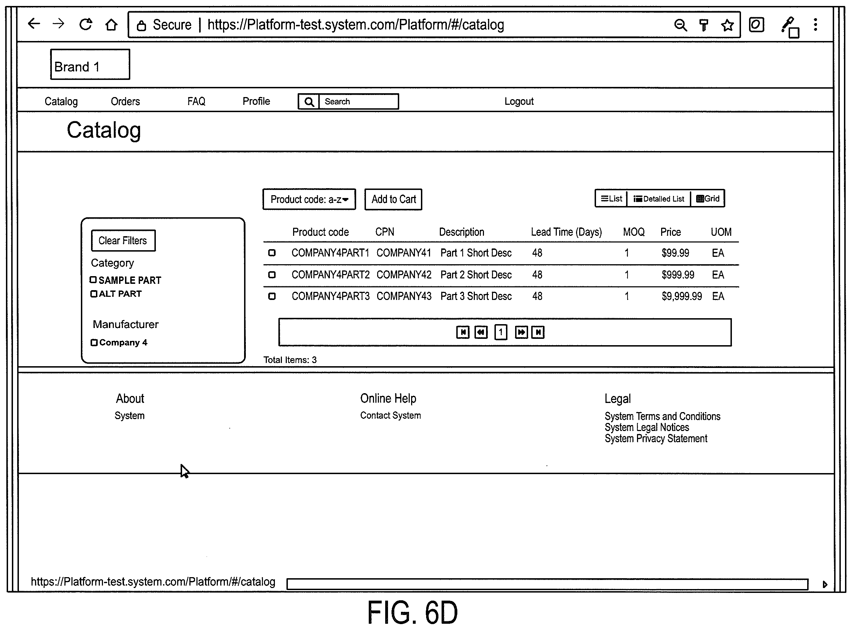

As illustrated in FIG. 6C, the customer may then be routed to a personalized portal associated with the selected customer profile. The personalized portal shown in Fig. 6C may have the look and feel of a first brand. This causes the customer to associate the webpage with the first brand, rather than the distributer who hosts the site. The customer may then elect to view catalog information and be routed to a webpage that displays catalog information specific to the customer, as is illustrated in FIG. 6D. In one embodiment, this webpage has the look and feel of the first brand for a supplier associated with the customer. For example, the webpage may include the first supplier branding, logos, or colors.

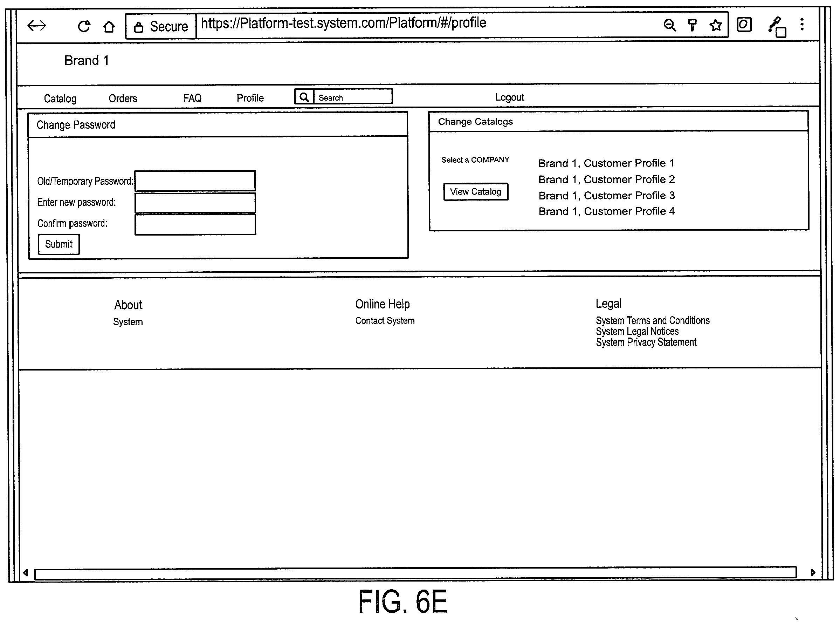

The customer may change the catalog they are viewing by selecting a different customer profile as is illustrated in FIG. 6E. As shown in FIG. 6E, the customer may select a new customer profile using a drop down menu. In another embodiment, this may show various supplier company names associated with a customer. In one embodiment, this webpage has the look and feel of a distributor. In another embodiment, this webpage may retain the look and feel of the first supplier, which is currently associated with the user.

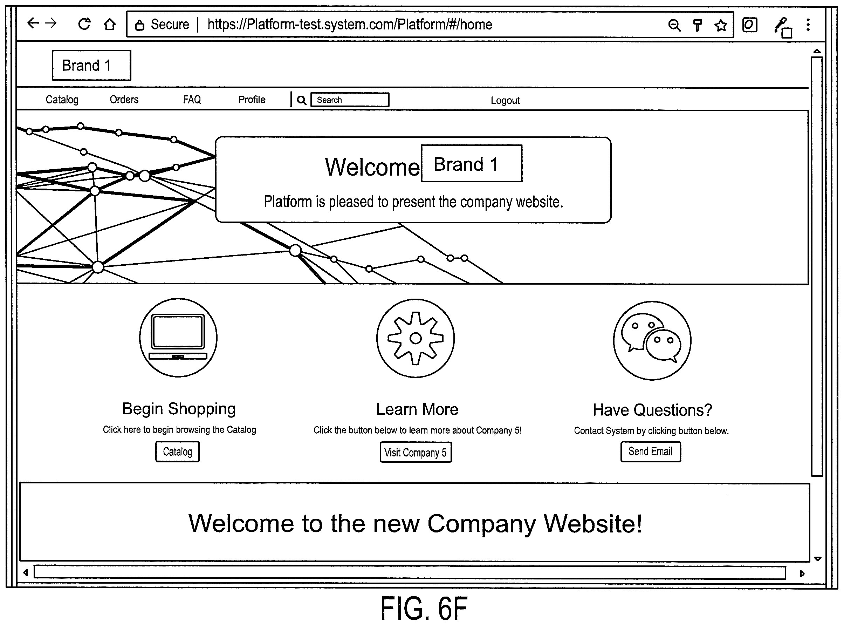

Once a new customer profile is selected, the customer may be routed to a website that is personalized to the selected customer profile as is illustrated in FIG. 6F. In one embodiment, this webpage has the look and feel of the first brand for a supplier associated with the customer. For example, the webpage may include the first supplier branding, logos, or colors.

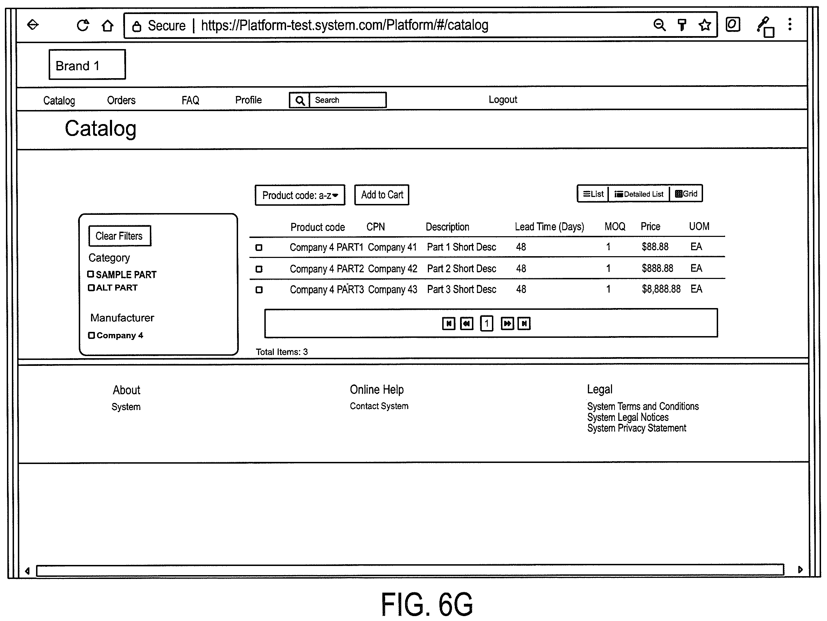

For example, as shown in FIGS. 6C and 6F, the landing webpage for both customer profiles may be identical as they are for the same customer and supplier relationship. However, the portion of the catalog visible to each customer profile may differ. In particular, FIG. 6G illustrates a different catalog for the second customer profile having the same supplier (program manager) profile. Indeed, the catalog displayed in FIG. 6D has different pricing than the catalog displayed in FIG. 6G.

Accordingly, as illustrated in connection with FIGS. 5A - 5H, an embodiment of the present disclosure provides the ability for customers with appropriate permissions to switch between and place orders from all catalogs they have access to. Additionally, as illustrated in connection with FIGS. 6A - 6G, an embodiment of the present disclosure provides the ability for a supplier to offer different catalogs to controlled groups of customers. As shown, a customer is not required to logoff and log back in to switch between suppliers associated with the customer, who the customer has customized features such as, for example, specialized prices or good and services options.

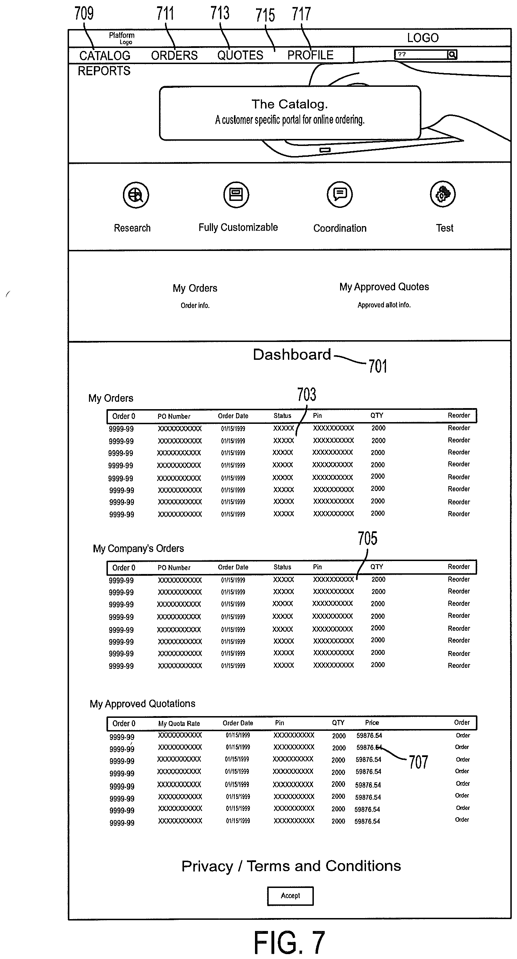

The webpage depicted in FIG. 7 is representative of a personalized user experience portal described herein.

In connection with, and prior to accessing, the webpage illustrated in FIG. 7, a user may be routed to a create user account webpage that may be displayed on a customer device 107 or a program manager device 105, or an administrator device 111, in accordance with an embodiment of the electronic commerce platform with personalized user experiences described herein. Upon providing an email address and password, a user may be provided with one or more fields to input or select additional information. In one embodiment, the fields to provide additional information may be dependent on the domain name of the email address the user used to create the account. For example, the company name and address may be prepopulated in accordance with the domain name of the email address used by the user. Prepopulated information may be retrieved from storage in database 109.

Once the user elects to create an account, user information and account information may be transmitted from the customer device 107, program manager device 105, and/or administrator device 111, to the server 101, via network 105. The server 101 may then store at least a portion of received information in the database 109. In one embodiment, the server 101 may store the information across one or more data structures located in the database 109 including, for example, a user information data structure, user access data structure, customer information data structure, program information data structure, and the like.

Alternatively, a user may select a sign in webpage that may be displayed on a customer device 107 or a program manager device 105, or an administrator device 111 in accordance with an embodiment of the electronic commerce platform with personalized user experiences described herein. In one embodiment, after a user provides the sign-in information including, for example, an email address and password, the entered information may be transmitted to an access gateway of the server 101. The access gateway of the server 101 may then compare the received information with information stored in the database 109 to verify the user's credentials. In one embodiment, only after the verification of the user's credentials may the user be rerouted to their personalized user experience portal.

In one embodiment, if a user arrives to the system described herein by a unique URL that is assigned to a particular customer, the user may immediately be granted access to a personalized user experience portal and the user may be designated as a customer.

In one embodiment, if a user has a token or an email domain that is affiliated to a particular program, the user may be designated a program manager. The server 101 may then transmit an email to the existing program manager indicating that a request to designate a new program manager has been made. If there is no existing program manager, the server 101 may transmit an email to the administrator device 111, where the administrator may receive an email indicating that the user is requesting access to the program. Once the existing program manager or administrator receives the email notification, they may login to their own personalized user experience portal and approve or deny the user's requested permission level. Once approved by the existing program manager or administrator the user may receive an email generated by the server 101 that includes credentials and information needed by the user for gaining access to their personalized user experience portal.

In one embodiment, if a user uses a token or email domain that is assigned to a customer that requires approval, the request may be transmitted by email to an administrator device 111 and/or program manager device 105. The administrator and/or program manager may then approve and/or adjust the permissions level for the customer.

In one embodiment, if a user that is not affiliated with a URL, token, or Email domain stored on the server 101, the access gateway of the server 101 may transmit a notification to an administrator device 111. The administrator may then approve/disprove of the user account and assign the type of user (i.e., customer, program manager) and permissions.

Accordingly, the improved computer software platform for a supply chain described herein may include the ability to add additional users and assign them the correct environment.

FIG. 7 illustrates one embodiment of a personalized user experience portal for a customer user. The personalized user experience portal may include a dashboard 701 that displays a user's past orders 703, the user's orders 705, and a user's approved quotations 707. Order information including order identification information, purchase order number, the order date, order status, order P/N, quantity, and reorder information may be displayed. The personalized user experience portal may also include a menu bar that provides links that allow a user to view, create, and/or edit a catalog 709, orders 711, quotes 713, a user's profile 715, and reports 717.

In one embodiment, the improved computer software platform for a supply chain may include a searching capability. The searching capability may allow a user to search manufacturers specific to the user. Alternatively, the searching capability may be configured so that the user is able to search thru any manufacturer. In one embodiment, an intelligent, predictive search mechanism may be used. In another embodiment, the search capability may be integrated with a filtering and/or sorting capability. For example, a user may be able to first filter by a manufacturer and then search by a particular product type or specification.

In one embodiment, the improved computer software platform for a supply chain may include sorting capabilities. In particular the graphical user interface may be configured so that a user may sort the parts displayed, or the results of a search by clicking on a column heading. For example, clicking on the column heading may sort the items in ascending or descending order. Alternative sorting capabilities may be implemented.

Using the personalized user experience portals and website illustrated in FIG. 7, a customer may place an order with a program manager. The user may view various items listed for sale. The list of items provided to the user may depend on the portion of the catalog permissioned to the user in accordance with their active profile. The user may then input a requested quantity, timing, and the like. Upon receiving the user's order, the server 101 may generate and transmit an email to the program manager via the program manager device 105 for fulfillment of the order.

In one embodiment, emails generated by the server 101 may use a server-side template engine, such as a JavaScript® template engine, which takes information provide by a user, inserts it into a template, composes an email and sends the email using a communication protocol to another user. Example server-side JavaScript® template engines may include the product Thymeleaf, and similar products. Example communication protocols may include simple mail transfer protocol (SMTP).

Using the personalized user experience portals and website illustrated in FIG. 7, a customer may also request a quote from a program manager. A customer may place a quote request via a customer device 107, which is then transmitted to the server 101. The server 101 may route the quote request to the appropriate program manager device 105 via an email. The program manager may then generate a quote in accordance with their specialized protocols of their program. Once the program manager has generated a quote, the program manager may use their own personalized user experience portal to enter quote response details. Once the quote response details are entered, the server 101 may generate an email based on the quote response details and transmit the email to the customer device 107. In addition to being emailed to the customer device 107, the quote response details may also be added to the database 109 and displayed to the program manager and/or customer via their respective personalized user experience portals.

User orders and quotes may be received at server 101 from a customer device 107 and then emailed to a program manager device 105 that executes a defined process specific to that program. The program manager may enter the order into an enterprise resource planning software. Once the order is shipped, the administrator for the enterprise resource planning software and/or program manager may transmit shipment details to the server 101. Upon receiving the shipment details, the server 101 may transmit an email notification to the customer device 107 and/or program manager device 105. The email notification may include order information (including item, price and quantity) and shipment information (including tracking). The use of email in placing an order and shipment tracking allows for the near immediate addition of new users to the system described herein as it does not require costly and timely IT implementations. Instead, new users can be integrated into the system upon providing their email address.

The use of email for order placement and shipment tracking, as well as the ability to construct personalized webpages based on pre-stored images and html text, or unloadable options provided in a template form, may allow the improved computer software platform for a supply chain described herein to create personalized portals within a short period of time (when compared to conventional systems). For example, in one embodiment, the improved computer software platform for a supply chain described herein may be configured to provide personalized portals within one day of receiving pre-stored images, html text, and other database information. This is appreciated when contrasted with the weeks, months, or longer time periods needed to customize conventional systems and make them compatible with, for example, other supplier-customized websites.

The systems and methods described herein allow for personalized user experience portal for each of the various types of users. In one embodiment, the functionality afforded to each user may depend on their role within the system (e.g., administrative user, quotation customer user, brand owner user, ordering customer user). For example, in a supply chain environment, users of order processing systems may include quotation customers (i.e., users that use the web-based processing systems to obtain quotes but not for ordering), brand owners (i.e., users that own a brand and instruct ordering customers to order and/or purchase the brand's item via the web-based processing system, also referred to a customer original equipment manufacturers, suppliers or program managers), or ordering customers (i.e., users that purchase products via the web-based processing system for a specific brand owner program).

An administrative user may be allowed to perform functions including, but not limited to, displaying information from all users, displaying a user profile, changing a user profile, deleting a user profile, creating a user profile, displaying a customer account, changing customer account information, creating a new customer account, changing an administrative user to a new customer account, uploading products for quote requests, uploading product images, setting minimum order values (MOV) for ordering customers, setting surcharge values for orders less than the MOV, and configuring one or more email addresses to receive an order output file.

In one embodiment, the administrative user may also be able to assign the ordering customers to the brand owner, change the logo or look and feel, landing page, text and related aspects of the brand owner's web page, control who has access to the brand owner's account, control the type of access provided to the brand owner's account, change terms and conditions linked for each customer account, change the logo, landing page, text and related aspects of the customer account, set customer user rights/roles by establishing quotation customer users, ordering customer users, and brand owner users, and updating order status.

Additionally, a quotation customer user may be allowed to perform functions including, but not limited to, log-in, perform product searches, request quotations, create a ship-to address, save a shopping cart, open a shopping cart, delete a shopping cart, display quote request history, update a user profile, and log-out.

In one embodiment, users including brand owner users, may be able to login and run reports. The type of reports provided may vary according to user permissions, programs, and customers. In one embodiment, the reports may be constructed using SQL, and downloaded in excel format. The reports may be filtered by user defined parameters prior to download. Reports may include information including, but not limited to, Administrative Customer Lists, Administrative Program Lists, Administrative Program Customer Relationships, Standard Orders Filtered on Part, Standard Orders by Customer and Date, Standard Users Login Request, Open Orders, Shipped Orders, Standard Part Catalog for Program, Standard All Orders, Standard Open Quotes, and Standard Order Report by Customer.

In one embodiment, an ordering customer user may be configured to perform functions including, but not limited to, log-in, perform product searches, request quotations, create a ship-to address, save a shopping cart, open a shopping cart, delete a shopping cart, display quote request history, update a user profile, log-out, order parts, view order status, run order status report and update order including amending the quantity of an order and/or canceling an order.

In one embodiment, the system provides authorized users the ability to view component catalogues with pricing, product, lead time and last time buy information.

In one embodiment, the pricing of an item may vary according to pre-established agreements between an authorized user and the seller. For example, multiple Contract Manufacturers may purchase the same part at different prices that are established based on pre-established agreements between the Contract Manufacturers and the OEMs.

The system may also allow authorized users to order components online. An authorized user may include contract manufacturers.

Using the system described herein authorized users may be able to run reports based on past transactions. Reported quantities may include information regarding the total quantity of parts ordered for a given date period, the number of open purchase orders for a given product and/or given date period. In one embodiment, the purchasing portal may be implemented as a website or web application.

In one embodiment, the purchasing portal may be scalable to work with various authorized users and add additional authorized users after the website or web application is already in use.

The improved computer software platform for a supply chain described herein may also include the ability to scale single or multi-tenant applications supporting multiple businesses and business models.

In one embodiment, although the customer may be purchasing goods and services from a supplier, it may appear that the customer is purchasing goods and services from an administrator or third party affiliated with the server system. In one embodiment, the administrator or third party affiliated with the server system may be the supplier. In one embodiment, the customer may purchase goods and services from a combination of the administrator/third party affiliated with the server system and a separate supplier.

In one embodiment, the systems and methods described herein may include the ability to support multiple payment arrangements including, for example, credit cards and terms accounts for items sold by an administrator or other parties. As discussed above, each item in the catalog may be assigned a seller of record. If an order includes items having different sellers of record, the server 101 may split the order into sub-orders, each sub-order corresponding to a particular seller of record.

As discussed above, in one embodiment, the program manager or administrator may enter item information into the catalog data structure 135 by use of a template or by entering item information by the web browser provided by the program manager computing device or the administrator computing device. FIGS. 8A - 8F illustrate the processes for populating the catalog data structure 135 of the database 109.

As illustrated in FIG. 8A, in one embodiment, an administrator or program manager may be able to navigate to a manage parts portion of the website. In one embodiment, the manage parts portion may be configured such that any modifications via the user interface provided by the webpage are applicable only to the program profile of the active profile.

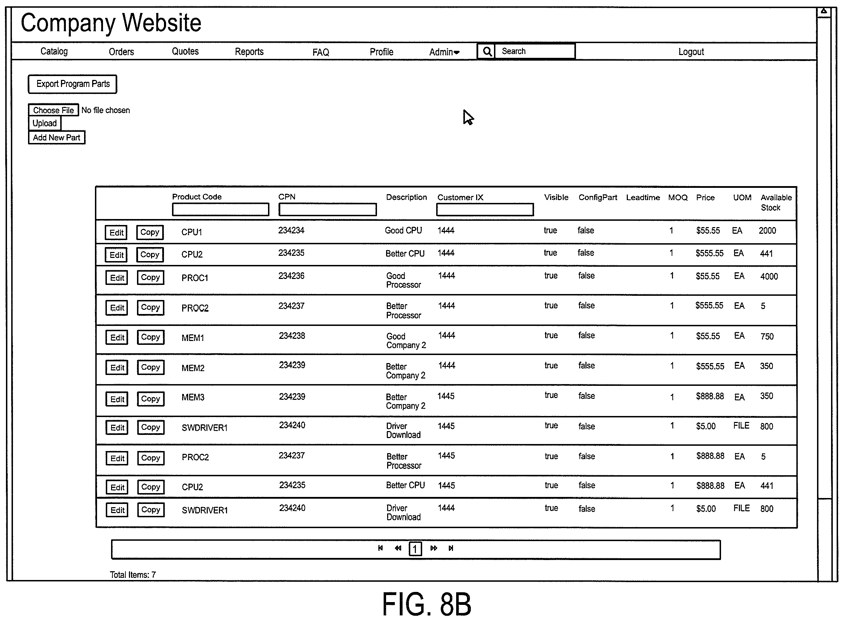

As illustrated in FIG. 8B, in one embodiment the manage parts portion of the website may display part information including the product code, customer part number, a description, customer identification information, visibility, configuration information, lead-time, maximum order quantity, order multiple quantity, and available stock.

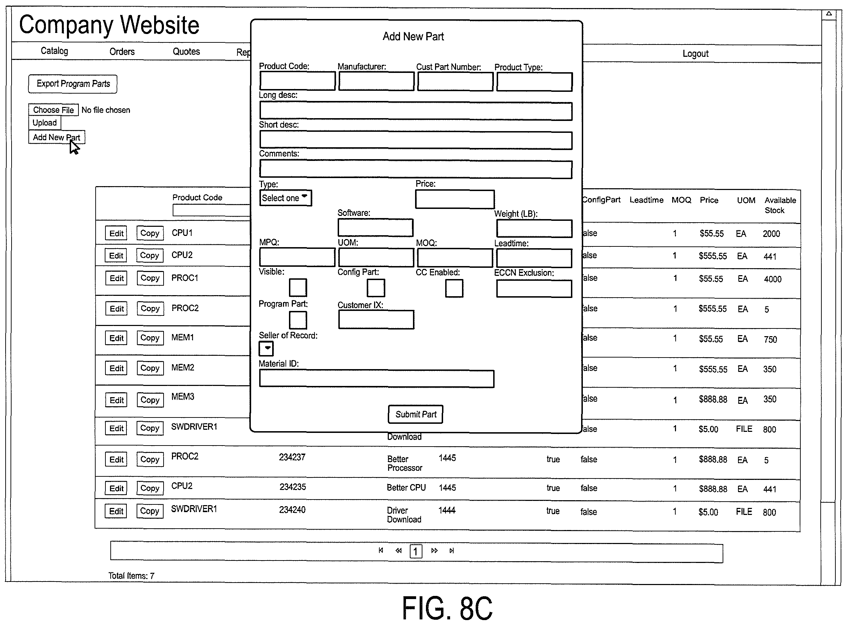

As illustrated in FIG. 8C, in one embodiment, the administrator or program manager may be able to add a new catalog item or part. The information added by the administrator or program manager into the website may be routed to the server 101 and then uploaded to the catalog table 135 of the database 109.

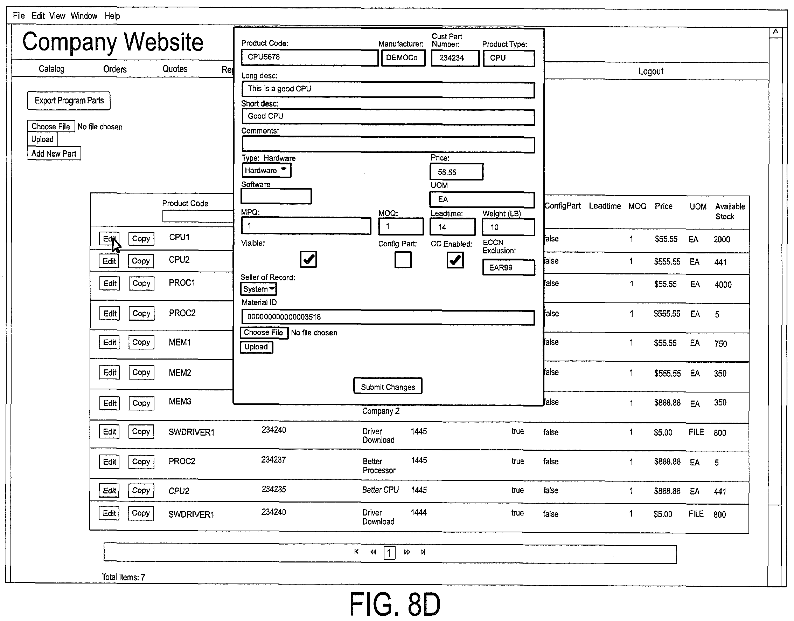

As illustrated in FIG. 8D, in one embodiment, the administrator or program manager may be able to edit an existing catalog item or part. If the item or part is a customer level designated item or part, then a record may exist for each customer to which the part is assigned.

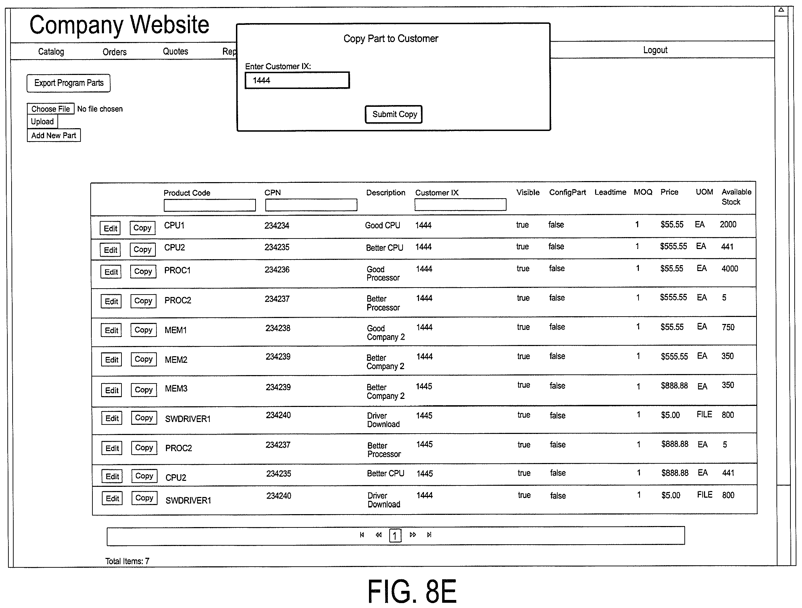

As illustrated in FIG. 8E, in one embodiment the administrator or program manager may be able to copy the information associated with a particular part. For example, this utility may be used to copy a part or item designated a customer level part or item associated with a particular customer to be copied to a second customer within the program.

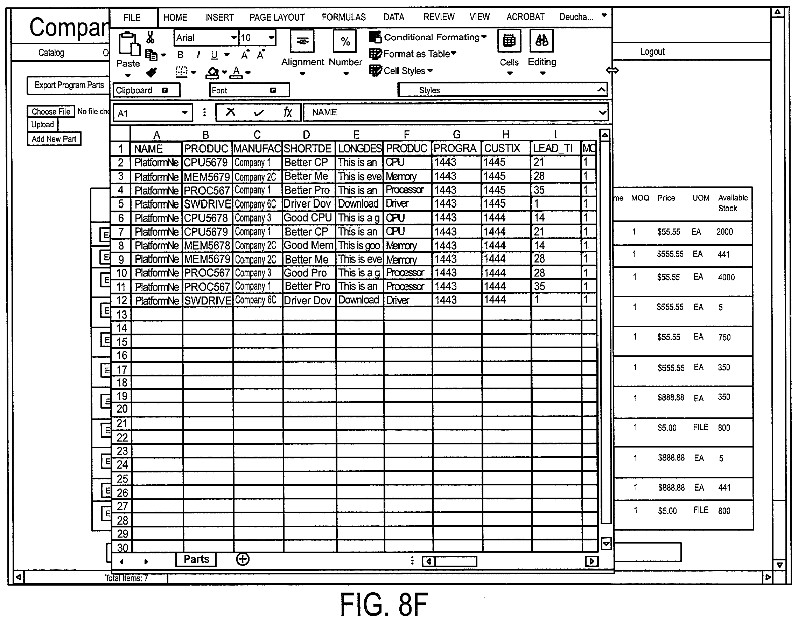

As illustrated in FIG. 8F, in one embodiment, the administrator or program manager may be able to export the information in the program part table to the user. The information may be organized in a downloadable file such as a spreadsheet. When a program is first created, the export program parts feature will allow the user to download a template where the user may enter part information including one or more part attributes. The completed template may then be uploaded to the website. If a program is longstanding, and having existing catalog items, a template may be downloaded and then edited. If the edited template is uploaded, the catalog data structure 135 of the database 109 may be updated based on the changes made to the template. In one embodiment, the template may be configured so that parts may not be deleted, but only set to not visible.

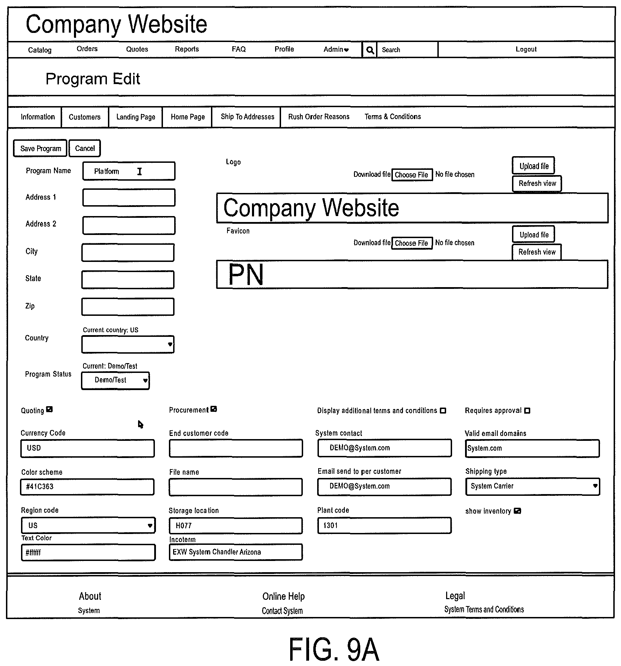

As illustrated in FIGS. 9A-9D, in one embodiment, the program manager or supplier portal is configured by an administrator. Upon logging into their personalized webpage, the administrator may elect to create a new program, or edit an existing program. The administrator may then enter information related to the program, such as the brand/program name, address, status, logo, and the like, as is illustrated in FIG. 9A. The administrator may be able to upload logo and other branding information to achieve a desired look and feel.

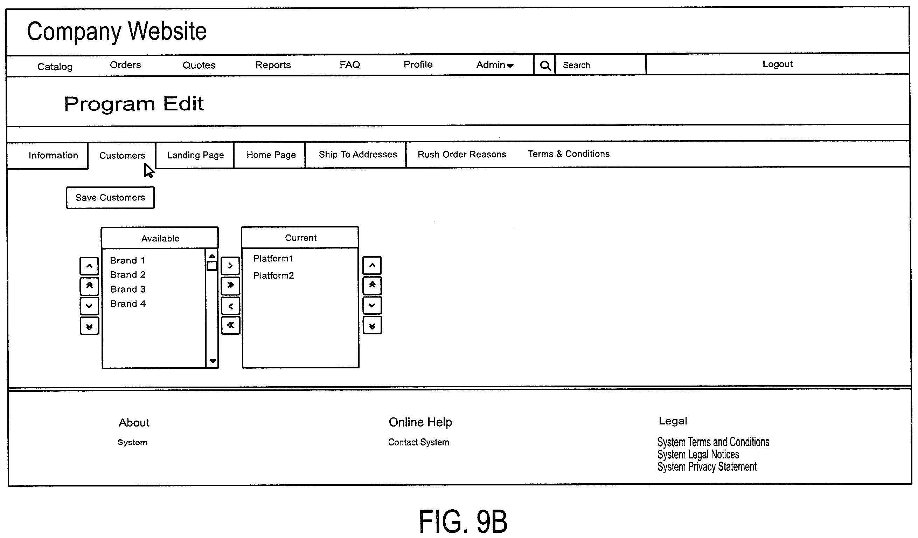

As illustrated in FIG. 9B, in one embodiment, the administrator may also assign customer(s) to a selected program.

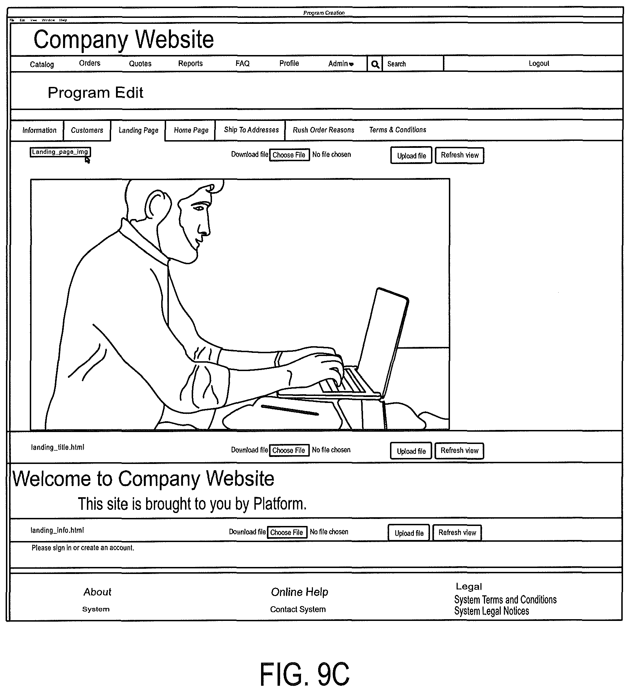

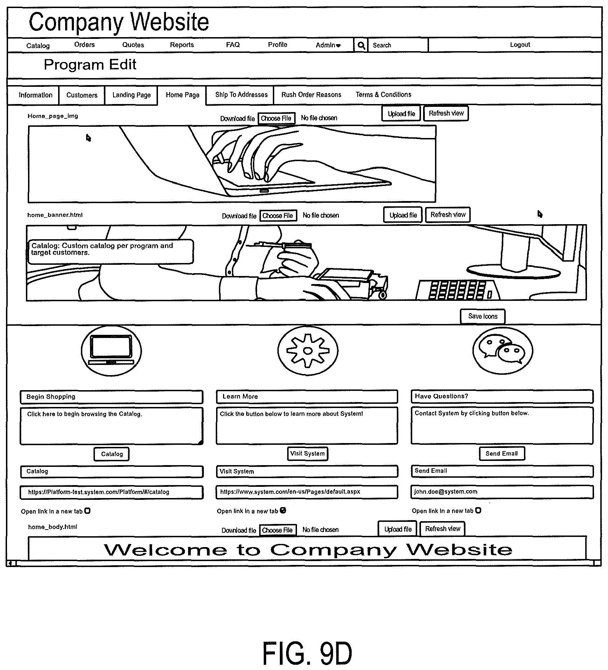

As illustrated in FIGS. 9C and 9D, in one embodiment, the administrator may upload and/or enter one or more images and pieces of html text used to construct a personalized website for a program. These images and html text may include banner images, carousel images, icons, open canvas HTML sections that accommodate custom content and the like.

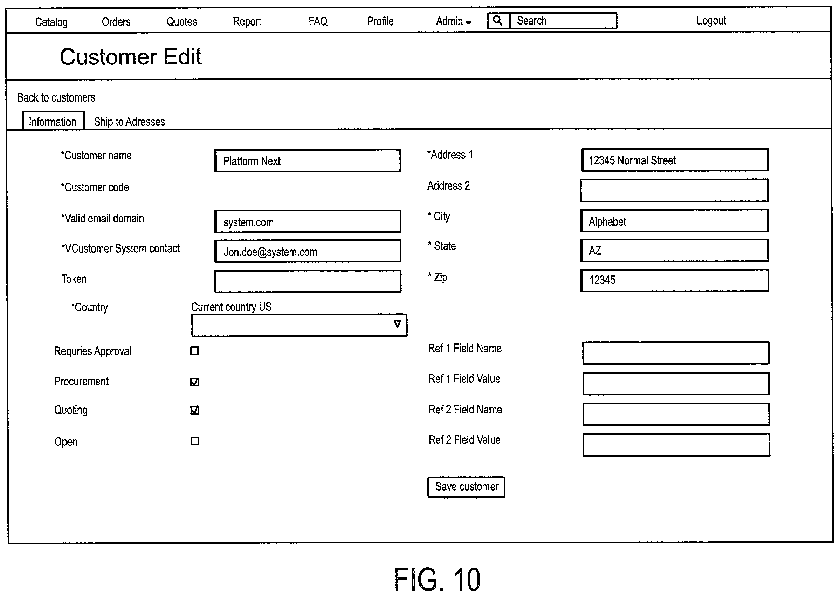

As illustrated in FIG. 10, in one embodiment an administrator or program manager may edit or add a new customer using an user interface provided by the website.

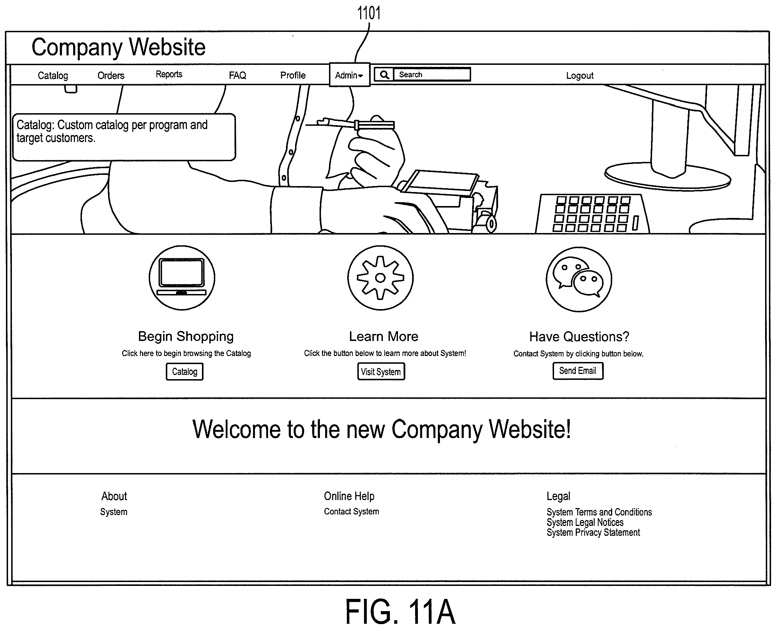

As illustrated in FIG. 11A, in one embodiment an administrator or program manager may be able to access a separate user interface provided by the website. As illustrated in FIG. 11A, an administrator tab 1101 may be visible only to an administrator.

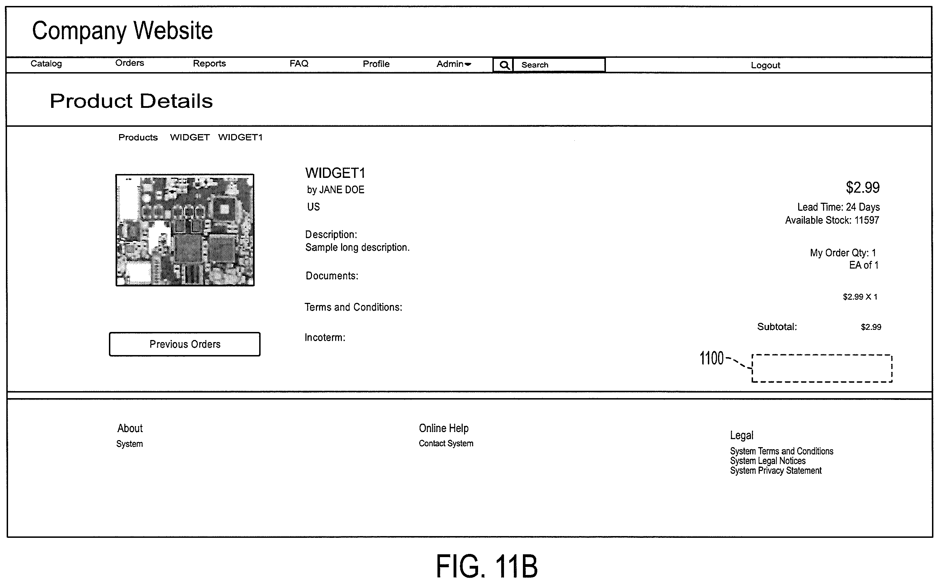

As illustrated in FIG. 11B, the user interface provided by the website to an administrator or program manager may differ from the user interface provided to a customer. For example, the administrator or program manager website may not allow an administrator or program manager to add an item to their cart for purchase as illustrated by 1100.

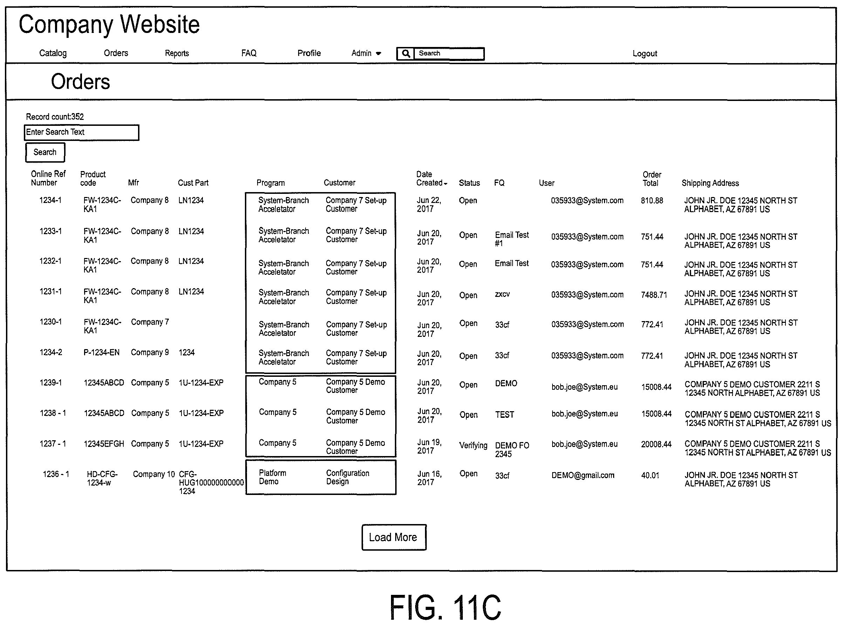

As illustrated in FIG. 11C, in one embodiment the program manager (or administrator) may have the ability to view order history including orders from past and present customers and programs. As illustrated the program manager is able to view orders from three different customer associated with three different programs.

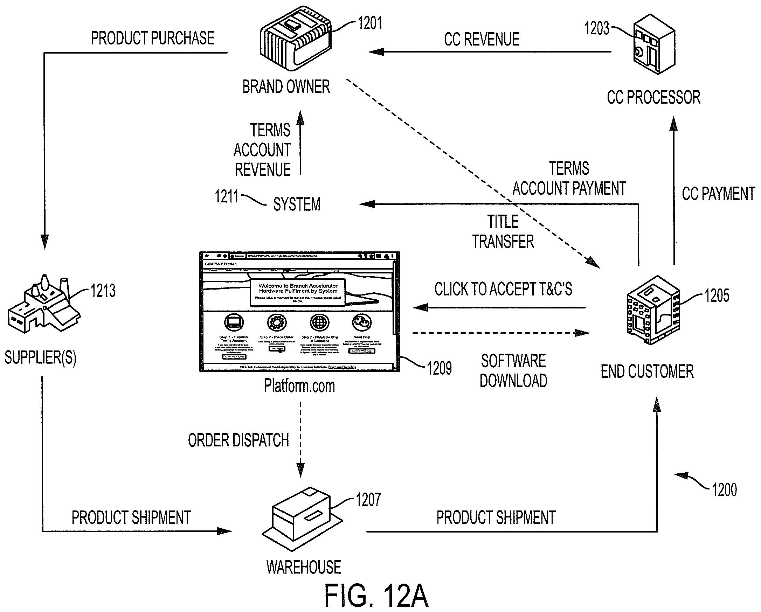

As illustrated in FIG. 12A the systems and methods described herein are compatible with various configurations between users. For example as illustrated in configuration 1200 a system 1211 may provide a personalized user experience portal 1209 that is visible to an end customer 1205. The system 1211 may also be in communication with a brand owner 1201 and a warehouse 1207. When a customer places an order using the user experience portal 1209 and accepts the terms and conditions provided by the user experience portal 1209 they may provide a payment (e.g., a credit card payment) to a financial processor 1203. The financial processor 1203 may provide the payment to the brand owner 1201. The brand owner may provide the product to a supplier 1213 who provides the products to a warehouse 1207. When a transaction is placed by the customer 1205, the user experience portal 1209 may also order the warehouse 1207 to dispatch or ship the product to the customer 1205. In this first configuration 1200, the server system may facilitate a supply chain model where the distributor acts as a merchant of record.

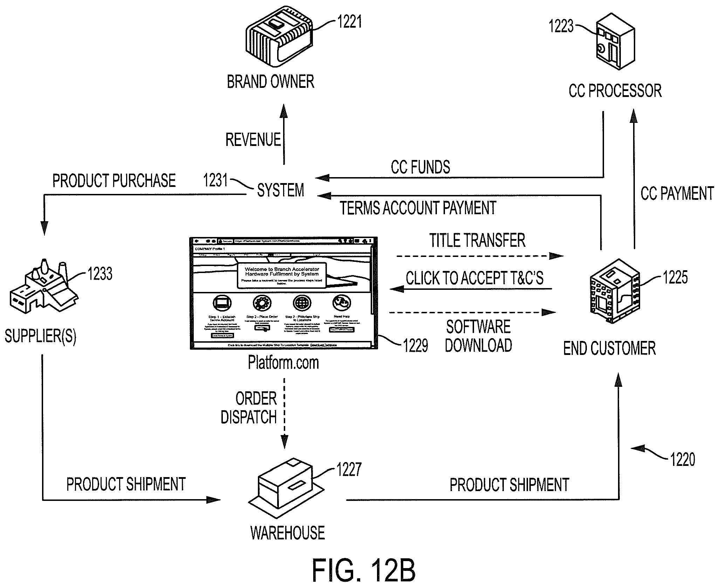

A second configuration 1220 is illustrated in FIG. 12B. In the illustrated configuration when a customer 1225 places an order they accept the terms and conditions of the personalized portal 1229 provided by system 1231. In return the customer 1225 may download software and receive the title. The customer 1225 may pay a financial processor 1223 that may transfer the funds to the system 1231 and the system 1231 may provide the funds to the brand owner 1221. Alternatively the customer 1225 may have a payment terms account with the system 1231 and process payments in this manner. When a product is purchased the system 1231 may request a supplier 1233 provide the product to a warehouse 1227. The user interface 1229 may direct the warehouse to ship the product to the user 1220. In this manner, the system 1231 may act as a payment intermediary. In this second configuration 1220, the server system may facilitate a supply chain model where the distributor acts as a seller of record.

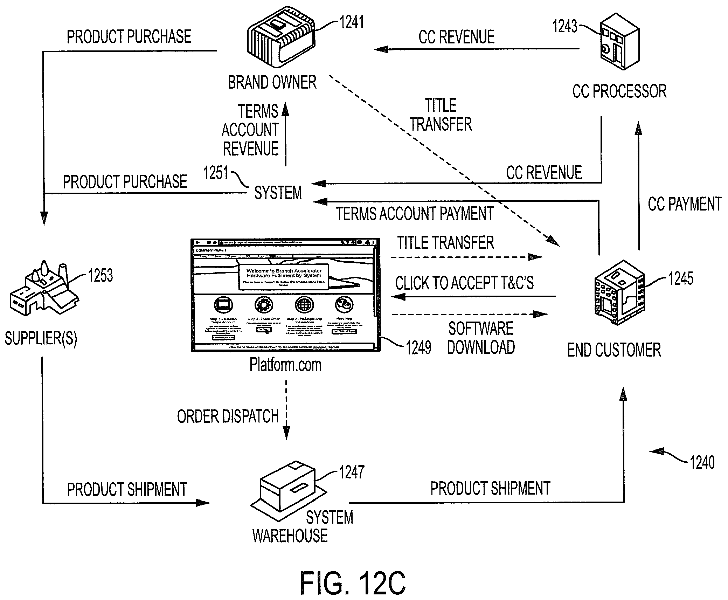

A third configuration 1240 is illustrated in FIG. 12C. As depicted the configuration 1240 may contain aspects of both the first 1200 and second 1220 configurations discussed above. As illustrated, in the third configuration 1240 the system 1251 may process payments directly from the customer 1245 or from a financial processor 1243. The financial processor 1243 may provide payments directly to the brand owner 1241 or to the system 1251. In this third configuration 1240, the server system may facilitate a supply chain model where the distributor acts both as a seller of record and a merchant of record.

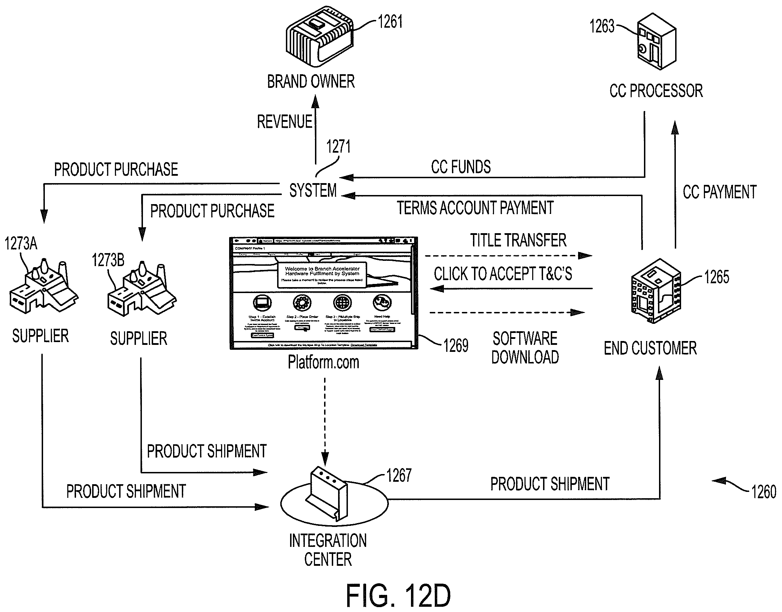

A fourth configuration 1260 is illustrated in FIG. 12D. As depicted in configuration 1260 the system 1271 serves as an intermediary between the brand owner 1261 and the financial processor 1263 and the customer 1265 who may pay using a terms account. The system 1271 may also be configured to interface with multiple suppliers 1273A, 1273B to ensure that products are shipped to a centralized integration center 1267 from which they may be shipped to the end customer 1265. In the fourth configuration 1260 the server system may be configured to allow pre-validated configurations of electronic equipment.

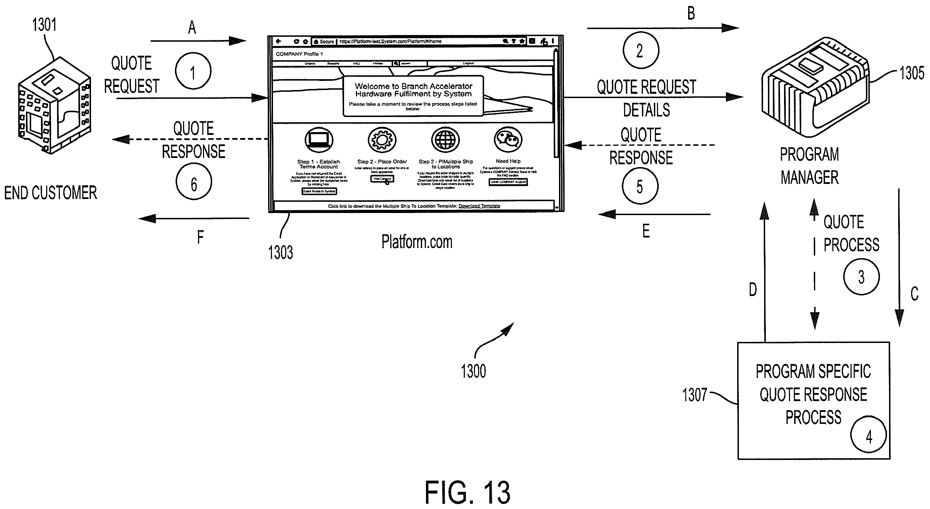

FIG. 13 illustrates the quote request process 1300 described herein. As illustrated a customer 1301 may request a quote A from the personalized portal 1303. The personalized portal 1203 may provide the quote request details B to a program manager 1305 who may provide the details C to a program specific quote response process 1307. The program specific quote response process 1307 may then provide a response D to the program manager 1305 who provides the response E to the personalized portal 1303. The personalized portal 1303 may then provide the response F to the customer 1301. This process may be performed entirely electronically.

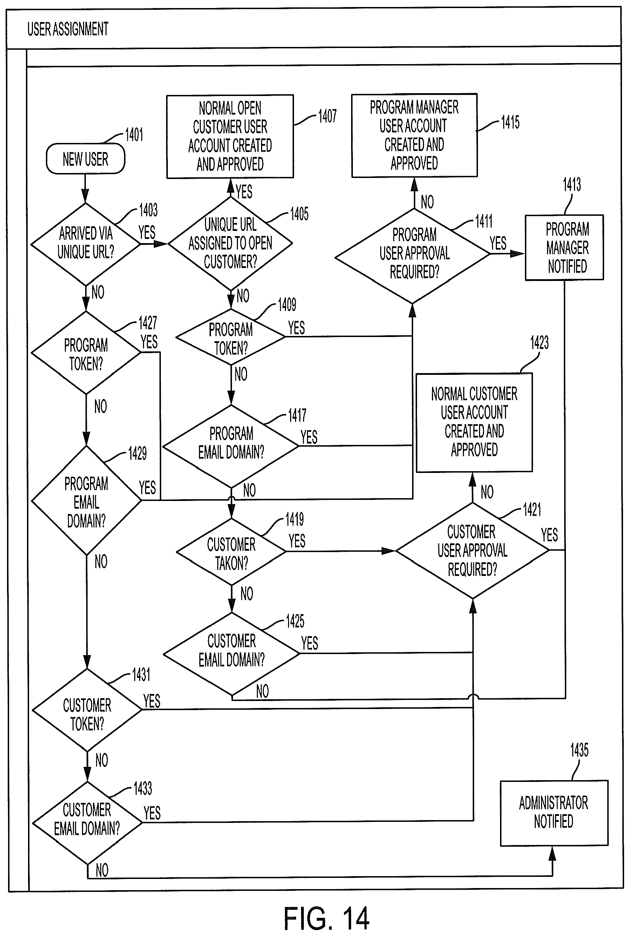

FIG. 14A illustrates a user assignment process. As illustrated at step 1401 a new user arrives at the system such as system 100 illustrated in FIG. 1. At step 1403 the system evaluates whether the user arrived using a unique URL. If so, at step 1405 the system evaluates whether the unique URL is assigned to an open customer. If so, at step 1407, the user is approved and a new user account is created. If the unique URL is not assigned to an open customer at step 1405, the system evaluates whether the user has provided a program token at step 1409. If a program token is provided, at step 1411 the system evaluates whether program user approval is required. If program user approval is required then the system notifies a program manager at step 1413. If program user approval is not required the system creates a new user account at step 1415. If at step 1409 the user has not provided a program token, the system evaluates at step 1417 whether the user has provided an email address that is associated with a program email. If the user has provided an email address that is associated with a program email the system reroutes the user to step 1411 of the process (described above).

If at step 1417 the user has not provided an email address that is associated with a program email the system moves to step 1419 and evaluates whether the new user has provided a customer token. If the user has provided a customer token, the system moves to step 1421 and evaluates whether customer approval is required for the customer token/email domain. If customer approval is not required for the customer token, a new user account can be set up at step 1423. If customer approval is required for the customer token, the system moves to step 1413 of the process (described above).

If at step 1419 the user has not provided a customer token the system evaluates at step 1425 whether a user has provided a customer email domain. If the user has provided a customer email domain, the system moves to step 1421 of the process (described above) and evaluates whether customer approval is required for the customer token/email domain. If the user has not provided a customer email domain at step 1425 the system moves to step 1413 of the process (described above).

Turning back to step 1403 of the process, if the system evaluates that a user has not arrived at the system with a unique URL, the process moves to step 1427 where the system evaluates whether the user has provided a program token. If the user has provided a program token, the system moves to step 1411 (described above). If the user has not provided a program token, the system moves to step 1429 and evaluates whether the user has provided a program email domain. If the user has provided a program email domain the system moves to step 1411 (described above). If the user has not provided a program email domain, the system checks at step 1431 if the user has provided a customer token. If the user has provided a customer token the system moves to step 1421 (discussed above). If the user has not provided a customer token, the system moves to step 1433 of the process and evaluates whether the user has provided a customer email domain. If the user has provided a customer email domain the system moves to step 1421 (discussed above). If the user has not provided a customer email domain the system moves to step 1435 where an administrator is notified of the new user.

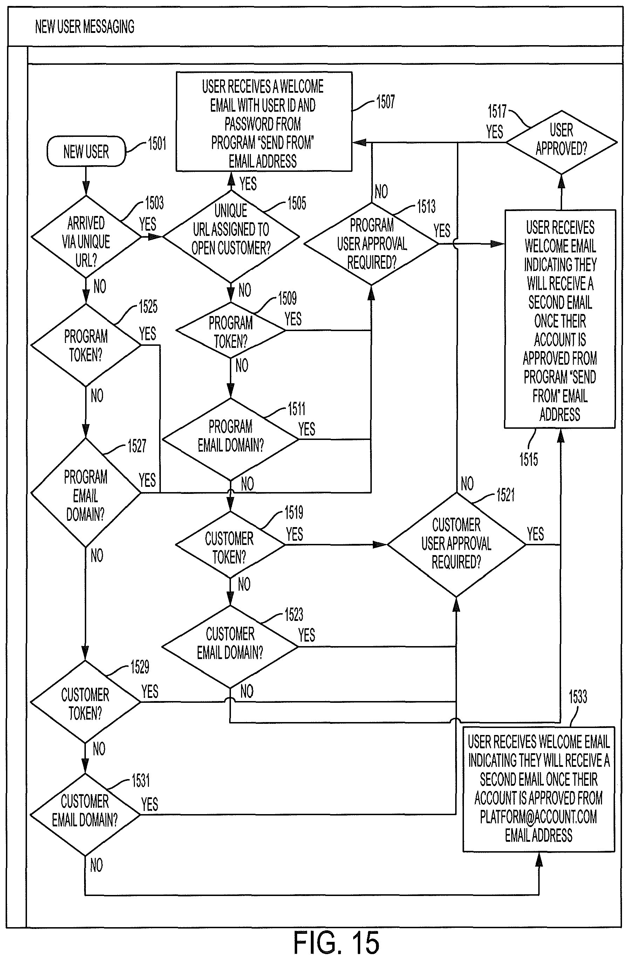

We turn now to FIG. 15, which illustrates how a system may establish a user messaging component of a system. As illustrated, at step 1501 a new user arrives at the system such as system 100 illustrated in FIG. 1. The system then evaluates at step 1503 whether the user arrived via a unique URL. If the user arrived via a unique URL, the system moves to step 1505 of the process and evaluates whether the unique URL is assigned to an Open Customer. If the unique URL is assigned to an Open Customer, the system moves to step 1507 and the system sends (and the user receives) a welcome email with User ID and password from an email address associated with the program. If the unique URL is not assigned to an Open Customer, the system moves to step 1509 and evaluates if the user provided a program token. If the user provided a program token, the system moves to step 1513 and evaluates whether the program token is associated with a program that requires program user approval. If the program token is associated with a program that requires approval the system moves to step 1515 and the system sends (and the user receives) a welcome email indicating that they will receive a second email from an email address associated with the program manager once the account is approved by an administrator and/or program manager. The system then moves to step 1517 and evaluates whether the user approval is required. If user approval is required the system moves to step 1507 (discussed above).

Turning back to step 1509, if the user does not provide a program token, the system moves to step 1511 and evaluates whether the user provides a program email domain. If the user has provided a program email domain, the system moves to step 1513 (discussed above). If the user has not provided a program email domain, the system moves to step 1519 and evaluates whether the user has provided a customer token. If the user has provided a customer token, the system at step 1521 evaluates whether the provided customer token is associated with a customer for which user approval is required. If the customer token is associated with a customer for which user approval is required the system moves to step 1515 (discussed above). If the customer token is not associated with a customer for which user approval is not required the system moves to step 1507.

Turning back to step 1519, if the user has not provided a customer token, the system moves to step 1523 and evaluates whether the user has provided a customer email domain. If the user has provided a customer email domain, the system moves to step 1521 and evaluates whether the customer email domain is associated with a customer for which user approval is required (discussed above). If the user has not provided a customer email domain the system moves to step 1515 (discussed above).

Turning back to step 1503 if the user did not arrive via a unique URL the system moves to step 1525 and evaluates whether the user provided a program token. If the user provided a program token the system moves to step 1513 (discussed above). If the user did not provide a program token the system moves to step 1527 to evaluate whether the user provided a program email domain. If the user provided a program email domain, the system moves to step 1513 (discussed above). If the user did not provide a program email domain, the system moves to step 1529 and evaluates whether the user provided a customer token. If the user provided a customer token the system moves to step 1521 (discussed above). If the user did not provide a customer token the system moves to step 1531 and evaluates whether the user provided a customer email domain. If the user provided a customer email domain the system moves to step 1521 (discussed above). If the user did not provide a customer email domain the system moves to step 1533. At step 1533 the system sends (and the user receives) a welcome email indicating that they will receive a second email from an email address associated with the administrator once the account is approved by an administrator and/or program manager.

In accordance with the systems and method illustrated in FIGS. 1-15, a computer system may be configured to provide a user with a multi-tier application that includes a web layer, an application logic layer, a data access layer. The web layer may request data and logic via a representational state transfer (REST) protocol, standard hypertext transfer protocol (HTTP) and the like. The application logic layer may allow a user (using program manager computing device 105 or customer computing device 107) to render web pages with data that is a composite of application services. The data access layer may contain the data and services for persistent storage and quick access of the database 109 including information related to programs, customers, orders, quotes, users, configurations, and customer/program specific parts. The data access layer may also be configured to encrypt all personally identifiable information including a user's name, address, customers, programs, and the like. As discussed above, the application may allow program specific access via unique domain URLs, tokenization, or email domain access.

The multi-tier application may be compatible with a number of services including for example address services, administrator configuration services, administrator export parts services, administrator part upload services, administrator services, autonomous system number (ASN) services, cart services, catalog services, checkout services, configuration services, create user services, credit card services, customer carrier services, customer services, frequently asked questions (FAQ) services, generic form services, login services, notification services, order detail services, order view services, permission services, program services, quote services, rebuild index services, report services, tax services, template services, terms services, user approval services, user services, users require approval services, and users unassigned services.

The address services may include the ability to get a "ship to" list that returns a user's ship to and bill to addresses based on the user's user type, program, and customer. If the current customer is an open customer, then the user's email address may be used to pull back the shipping addresses. Open customer's shipping addresses may be specific to that user. The address services may also include the ability to get a "customer ship to" list that may return a list of shipping addresses for the requested customer. This service may be used by administrators to view and edit shipping addresses for customers. The address services may also include the ability to get a "program ship to" list that may return a list of shipping addresses for a requested program. This feature may be used by administrators and program managers to view and edit shipping addresses for programs. The address services may also include the ability to save a "ship to" list which may save a requested shipping address to the database. The address services may also include the ability to remove an address which may delete a requested shipping address from the database 109.

The administrator configuration services may assist administrators and program managers in designing, editing, and creating configurable parts in a database 109. The services may include the ability to get a configuration list that may return a list of parts that are configurable for viewing and editing by administrators and program managers. The administrator configuration services may also include the ability to get a configuration which may return configurations available for a requested part. The administrator configuration services may also include the ability to get configuration values which may return the options available for particular part's configuration. The administrator configuration services may also include the ability to get types which may return a list of available configurations for parts that may assist administrators and program managers in viewing and configuring parts. The administrator configuration services may also include the ability to get a single part which may return the part for a requested configuration option. The administrator configuration service may also include the ability to get parts which may return a list of parts of the requested configuration options. The administrator configuration services may include the ability to enter a new type by saving a requested configuration type to the database 109 and allow administrators and program managers to create new configuration types. The administrator configuration services may also provide the ability to enter a new value, or save a requested configuration option to a database 109 thereby allowing administrators and program managers to create new configuration options. The administrator configuration services may also include the ability to search for parts by a requested string of characters, and remove parts that match a particular type or value. The administrator configuration services may also save the requested final part configurations in the database 109. In one embodiment, this may involve saving stock keeping unit (SKU) values.

The administrator export parts service may be used to obtain an excel file having all the parts in the database. This service may be provided to administrators and/or program managers.

The multi-tier application may also include an administrator parts upload service that may upload a file, read the contents of the file and update the database 109 accordingly. The file may include part information. The administrator parts upload service may be helpful for administrators and program managers to manage part information in the catalog data structure 135.

The multi-tier application may also include administrator services that are configured to assist administrators and program managers update programs, customers, and parts. The administrator services may be capable of returning a list of all the programs an administrator or program manager has access to, returning a requested program if a user is allowed access to the requested program, save a requested program to the database (including creating a new program in the event that the program is new), return customers for a requested program, return a list of customers that are not associated with a requested program, update the database 109 such that customers become associated with a requested program, return a list of the customers in the database 109 that a program manager has access to, return information related to a particular customer, and save information related to a customer to a database 109 (or create a new customer profile if the customer's information is not already in the database 109).

The administrator services may also return the icons or graphics for a requested program, save icons or graphics to the database 109 for a requested program, enable an administrator or program manager to return, download, save, upload or update a requested file. The administrator services may also be used to retrieve part catalogs for a current program, a list of configurable parts, retrieve a list of sellers of record for a requested part, update a part in the database 109, store a new part in the database 109, copy a part in the database 109, and return a number of parts present in the current program (part count). The administrator services may also be used to search for a particular product codes characters and return a list of parts containing the requested characters in the their product code. The administrator services may also be used to search for a particular customer part number and return a list of parts containing the requested characters in their customer part number. The administrator services may also be configured to return a list of parts corresponding to a requested customer number for a current program. The administrators services may also be configured to allow a user to upload an image for a part to the database 109, update the database 109 and/or server 101 with a datasheet file for a particular part, and provide the user with a list of all the sellers of record.

Autonomous system number (ASN) services may include the capability to allow users to view their orders ASNs and return an ASN for a requested order line item. The ASN services may also be used to store ASN information to a database 109 in correspondence with a particular order line item. The ASN services may be used by administrators, program managers, and customer service users to manage ASN.

The cart services portion of the application may be used to manage customer purchases. For example, the cart services may be used to get program customer information, or return information that is specific to the current user's current program and customer that is stored on the database 109. The information may be used to decide if additional charges need to be added to the user's order, or if there is a minimum user quantity that needs to be applied as the user checks out. The cart services may include a save option that saves the user's current shopping cart list such that they can come back to have their shopping cart auto populated with the same items. The cart services may also include a load option that returns a list of previous shopping carts the user has saved. The cart services may also include a read option that loads the user's current shopping cart with items they have saved from a previous visit. And the cart services may also include a delete option where a requested shopping cart list may be removed from the database entry for a user.

The catalog services aspect of the multi-tier application may include an option to display a catalog based on a user's current program and customer. The catalog services aspect may also be configured to apply filters on the parts in the catalog. The catalog services may provide information to a user including a catalog count corresponding to the number of parts in the current part catalog the user is viewing, details corresponding to a part's detailed information for the product detail page, and image information corresponding to a part's image. The catalog services may also provide a user with category, manufacture, and regional information. For example, the catalog services may provide a user with a user with the current categories, manufactures, and regions for the current part catalog. The catalog services may allow a user to filter the catalog based on the categories, manufacturers, and regions.

The checkout services aspect of the multi-tier application may provide aspects that may help guide a user through the checkout process. This may include a rushed order reason aspect that allows a user to select why their order needs to be shipped inside of a part's lead time (time between placing an order and shipment). The checkout services may also include a place a quote aspect that handles a user's request to place a quote for items in their cart. The service may accept a user's request and provide a user with a quote number, or alternatively notify the user of an error if the quote is not accepted. The checkout services may also include a shipping charge service that may provide a user with an estimated shipping charge for items in the user's cart. The checkout services may also include the ability to retrieve an Export Control Request (ECR) number if the user's ship to country requires an ECR form. The checkout services may also include the ability to retrieve an ECR form for the user to fill out, check that an ECR form has been completed before a user is allowed to proceed through the checkout process, submit an ECR form, and check export control protocols (e.g., Export Control Classification Numbers (ECCN)) before allowing a user to complete the checkout process.

The configuration service aspect of the multi-tier application may be configured to display configurable part options to a user and the differences in the price for each option. This may include the ability to display all the configuration options for a requested part, return a final part's product code for the various configuration options and a corresponding link to the final part in the part catalog, and return a list of final SKU parts for a requested configuration result.

The create user service aspect of the multi-tier application may include the ability to create new users and setup customers and/or programs. After a new user is created, the create user service aspect may also generate a new email. In particular, the create user service may receive a request to create an account, and try to assign user to a specific program or customer based on their request. If the user is not able to be assigned to a particular program or customer, then the user is setup as an unassigned user. An administrator may have the ability to assign the new unassigned user to a customer or program, before the user can receive access to the platform.

The credit card service aspect of the multi-tier application may include the ability to interface with one or more third party services to authenticate a user's payment method (e.g., credit card) for a requested amount. If there is an error in the authentication process, a message may be displayed to a user.

The customer carrier service aspect of the multi-tier application may include the ability to return a user's previous carrier history (including the carrier's information). The customer carrier service aspect may also allow a user to turn carrier information for a requested carrier.

The customer services aspect of the multi-tier application may include the ability to return information about a customer that the user is viewing, change the customer the user is viewing to a requested customer (after validating that the user can view a requested customer), and return a requested customer's programs (if the user is permissioned access to a requested customer).

The frequently asked questions (FAQ) service aspect of the multi-tier application may provide a user with a display of common questions asked by users and their answers.

The generic form service aspect of the multi-tier application may include a form that the user may need to fill out. The service may provide the user with a form during the checkout process and save the user's answers in the database 109 once the user has completed the form.

The login service aspect of the multi-tier application may include a login component that validates the user's email address before allowing a user to access portions of the platform, a current user component that returns a user's information after they have successfully logged in, a reset password component that validates that the user and then resets the password corresponding to a user's email address, a change password component that validates a user and updates the password corresponding to the user's email address. The login service may also include a logout component where the user's access to the platform is revoked and then the user is redirected to input login information.

The notification service aspect of the multi-tier application may be configured to provide users with notifications related to inventory for a particular part. For example, once a part has sufficient inventory for the user to purchase, the user may be notified via email. The notification service may include an add notification component that is configured to check if the user already has an inventory notification registered for the requested part and if the user does not, then the service may create a new inventory notification record for the requested part and quantity.

The order detail service aspect of the multi-tier application may be configured to manage order details. For example, a first component may return information related to the whole order and/or requested line item details. A second component may return information to administrators, program managers, and/or customers to make changes to an order, including, for example, the current status of the order (e.g., open, processed, canceled, verified, shipped). A third component may allow an administrator, program manager or customer to add, remove or modify additional information records associated with a particular order's line item.

The orders view service aspect of the multi-tier application may be configured to return all of the current orders associated with a particular user. In one embodiment the orders view service may be configured such that if a user is viewing orders for on open customer, then they can only view their orders. However if the customer is not an open customer, then they can view all of the orders made from the current program's catalog for the current customer.

The permission service aspect of the multi-tier application may be configured to determine whether a user is allowed access to a requested portion of the platform based on the user's role.

The program service aspect of the multi-tier application may be configured to help a user customize their website (e.g., logos, program icons, custom pages). The program service may include one or more components that provide a logo image for a current program, provide a favicon image for a current program, provide a landing page image for the current program, provide a banner image for a current program's homepage, and provide program icons for the current program. The program service may include a get current program component that returns the current program the user is viewing, a change program component that changes the program the user is viewing based on the user type and access credentials. The program service may also include a get customers component that may provide a user with a listing of all of the customers a requested program has access to.

The quote service aspect of the multi-tier application may be configured to provide services to view, edit, approve, and reject quotes. This may also include functionalities to resend a quote (in the event the quote is changed by an administrator, program manager, customer, or approver), and approve and reject a price.

The rebuild index service aspect of the multi-tier application may include a rebuild index service component that is configured such that users can search an applications' parts, orders, and FAQs.

The report service aspect of the multi-tier application may generate and manage user reports. For example the report service aspect may check if the current user has access to any reports, provide the current user with the reports that they have access to, and return a link (e.g., URL) for a generated report.

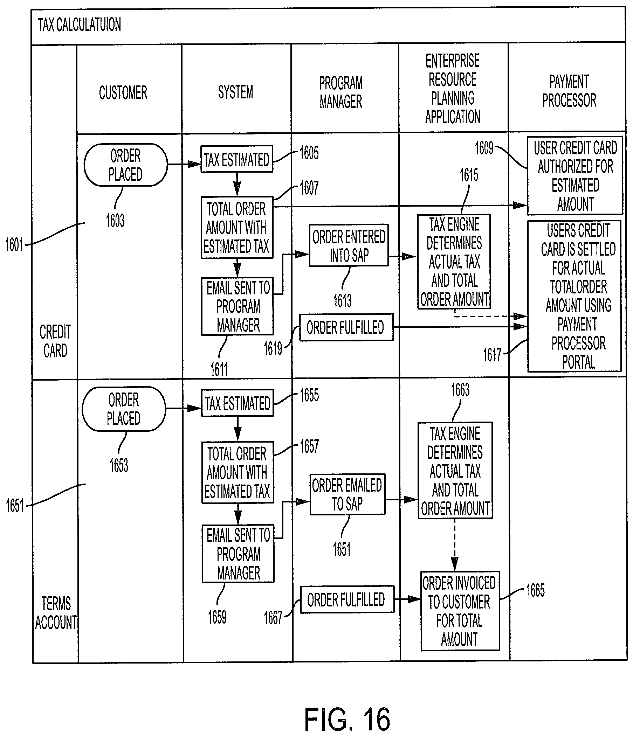

The tax services aspect of the multi-tier application may provide a user with a tax rate based on the country the items are being shipped from. The tax services aspect may require collaboration between customers, the system, program managers, enterprise resource planning applications, and payment processors. For example, as illustrated in FIG. 16, the tax services provided by the multi-tier application may vary according to whether an order is being paid by credit card 1601 or by an account affiliated with the multi-tier application 1651. When an order is being paid by credit card 1601, in a first step a customer places an order 1603. The system then estimates the amount of tax in step 1605, and calculates the total order amount with estimated tax in step 1607. In a next step 1609, a payment processor aspect of the system may authorize the user's credit card for the estimated amount. After the total order amount is calculated in step 1607, the system may also send an email to the program manager at step 1611. The program manager may then at step 1613 may enter the order into an enterprise resource planning application (ERP). The ERP may include a tax engine that determines at step 1615 the actual tax amount for the order. The ERP may provide the actual amount to the payment processor at step 1617 so that the customer's credit card is settled for the actual amount for the order after the payment processor receives a notification from the program manager that the order is fulfilled at step 1619.

A similar process may apply to an order paid by an account affiliated with the multi-tier application 1651. As illustrated a customer may place an order at step 1653. The system may then at step 1655 estimate the taxes for the order, and calculate at step 1657 the total order amount with estimated taxes. The system at step 1659 may then send an email to the program manager and at step 1651 the program manager may enter the order information into an ERP. The ERP at step 1663 may include a tax engine that determines the actual tax and total order amount. The ERP may then at step 1665 create an order invoice for the total amount. The program manager at step 1667 also fulfills the order.

The template services aspect of the multi-tier application may be configured to moderate activities related to the program's custom templates. The templates may be used to build and display customized webpages for each program. The template services aspect may provide a user with a custom hypertext link to a customized webpage, and provide a template file for a current program and requested template.

The terms service aspect of the multi-tier application may be configured to provide information related to the terms of services for a transaction using the described platform. For example, the terms service aspect may provide a user with all of the terms and conditions for a requested program, including for checking out (purchasing items using the platform), based on a user request. This service may also moderate terms and conditions for quotes and orders.

The user approval service aspect of the multi-tier application may be configured to create and approve new users.

The user service aspect of the multi-tier application may be configured to provide administrators and program managers the ability to view, edit and save users. It may be configured to provide a user with a list of approved users that the requesting user is permissioned to view. An administrator may be permissioned to view all of the users. The user service aspect may also be configured to return information about a user, including the user's role, update the database with user information, create a database entry corresponding to the user, user access permissions, a listing of a user's customers and programs, and the like.

The users require approval service aspect of the multi-tier application may be configured to provide administrators and program managers information related to the users that are not currently approved and require approval. Program managers may be permissioned to view only users for their program.

The users unassigned service aspect of the multi-tier application may be configured to provide administrators access to users that have not been assigned to a particular program or customer.

Although the multi-tier application in connection with the platform is described above in terms of a collection of services that are provided to a user, more or fewer services may be associated with the multi-tier application. Additionally, alternative services may be associated with the multi-tier application. Furthermore, each service may include one or more of the components described above.

Systems and methods of the present disclosure may include and/or may be implemented by one or more specialized computers including specialized hardware and/or software components. For purposes of this disclosure, a specialized computer may be a programmable machine capable of performing arithmetic and/or logical operations and specially programmed to perform the functions described herein. In some embodiments, computers may include processors, memories, data storage devices, and/or other commonly known or novel components. These components may be connected physically or through network or wireless links. Computers may also include software which may direct the operations of the aforementioned components. Computers may be referred to with terms that are commonly used by those of ordinary skill in the relevant arts, such as servers, personal computers (PCs), mobile devices, and other terms. It should be understood that those terms used herein are interchangeable, and any special purpose computer capable of performing the described functions may be used.

The foregoing examples are provided merely for the purpose of explanation and are in no way to be construed as limiting. While reference to various embodiments are shown, the words used herein are words of description and illustration, rather than words of limitation. Further, although reference to particular means, materials and embodiments are shown, there is no limitation to the particulars disclosed herein. Rather, the embodiments extend to all functionally equivalent structures, methods, and uses, such as are within the scope of the appended claims.

## Claims

1. An improved electronic system comprising:
at least one computing device having a web browser and an input device;
a non-transitory memory having processor executable instructions; and
at least one server communicatively coupled to the at least one computing device via a network, the at least one server further comprising a processor in communication with the non-transitory memory and an access gateway;
the at least one server being configured by the processor executable instructions to:
receive, via the input device of the at least one computing device, user identifying information;
submit, to the access gateway, the received user identifying information to retrieve, based on the user identifying information, a first set of parameters stored in the electronic database the user has permissions for;
display, via the web browser of the at least one computing device, the first set of parameters;
receive, via the input device of the at least one computing device, a selection for a first parameter among the first set of parameters;
display, via the web browser of the at least one computing device, a second set of parameters based on the selected first parameter;
receive, via the input device of the at least one computing device, a selection for a second parameter among the second set of parameters;
construct, via a personalized portal creation module, a first set of one or more webpages including electronic data corresponding to the selected first parameter and the selected second parameter, wherein the electronic data is retrieved from the electronic database;
display, via the web browser of the at least one computing device, the constructed first set of one or more webpages;
receive, via the input device of the at least one computing device, a selection for a third parameter of the second set of parameters without submitting new user identifying information or resubmitting the received user identifying information to the access gateway;
construct, via the personalized portal creation module, a second set of one or more webpages including electronic data corresponding to the selected first parameter and the selected third parameter; and
display, via the web browser of the at least one computing device, the constructed second set of one or more webpages.

2. The system of claim 1, wherein user identifying information further comprises at least one of a token, an email address, and a pre-registered web page.

3. The system of claim 1, wherein electronic data is stored in the electronic database in one or more data substructures.

4. The system of claim 4, wherein the data substructures further comprises at least one of a user information data structure, a user access data structure, a program customer cross reference data structure, a program information data structure, a catalog data structure and a company information data structure.

5. The system of claim 1, wherein the parameters in one of the first set of parameters and the second set of parameters is related to a program manager and the parameters in the other of the first set of parameters and the second set of parameters is related to a customer.

6. The system of claim 5, wherein constructing a set of one or more webpages including electronic data corresponding to the selected parameters further comprises:
generating an active profile corresponding to the selected program manager and the selected customer;
accessing one or more data structures to retrieve program attributes and customer attributes corresponding to the generated active profile; and
retrieving and displaying on the at least one computing device, catalog information corresponding to the generated active profile.

7. The system of claim 1, wherein the electronic data corresponding to the selected first parameter, the selected second parameter or the selected third parameter further comprises at least one of catalog data, reporting data, order history data, terms and conditions data, branding data, frequently asked questions data, freight information data, quote data and order data.

8. The system of claim 7, wherein the branding data further comprises at least one of landing page information, button information, menu information, hyperlink information, home page banner information, icons, and logos.

9. The system of claim 1, wherein the access gateway determines whether the user is permissioned to access data stored in an electronic database by retrieving user access information from a user access data structure of the electronic database based on the received user identifying information.

10. The system of claim 1, wherein the at least one server is further configured by the processor executable instructions to:
display, via the constructed first set or second set of one or more webpages displayed on the at least one computing device, a catalog of items;
receive, via the at least one computing device, at least one of an electronic order request and an electronic quote request for at least one item in the catalog; and
process the received electronic order request or electronic quote request by:
automatically generating an email including information related to the electronic order request or the electronic quote request;
automatically transmitting the email to a computing device affiliated with each of the at least one item;
receiving a status email from each of the computing devices affiliated with each of the at least one item; and
automatically generating and transmitting a notification to the at least one computing device that provided the electronic order request or the electronic quote request.

11. The system of claim 1, wherein the at least one server is further configured by the processor executable instructions to:
display on the at least one computing device, one or more webpages having a template for at least one of uploading and entering the electronic data;
store the uploaded and entered electronic data in the electronic database.

12. An improved method comprising:
receiving, via an input device of at least one computing device having a web browser and the input device, user identifying information,
the at least one computing device communicatively coupled to at least one server via a network, the at least one server further comprising a processor in communication with a non-transitory memory having processor executable instructions and an access gateway;
submitting, to the access gateway, the received user identifying information to retrieve, based on the user identifying information, a first set of parameters stored in the electronic database the user has permissions for;
displaying, via the web browser of the at least one computing device, the first set of parameters;
receiving, via the input device of the at least one computing device, a selection for a first parameter among the first set of parameters;
displaying, via the web browser of the at least one computing device, a second set of parameters based on the selected first parameter;
receiving, via the input device of the at least one computing device, a selection for a second parameter among the second set of parameters;
constructing, via a personalized portal creation module, a first set of one or more webpages including electronic data corresponding to the selected first parameter and the selected second parameter, wherein the electronic data is retrieved from the electronic database;
displaying, via the web browser of the at least one computing device, the constructed first set of one or more webpages;
receiving, via the input device of the at least one computing device, a selection for a third parameter of the second set of parameters without submitting new user identifying information or resubmitting the received user identifying information to the access gateway;
constructing, via the personalized portal creation module, a second set of one or more webpages including electronic data corresponding to the selected first parameter and the selected third parameter; and
displaying, via the web browser of the at least one computing device, the constructed second set of one or more webpages.

13. The method of claim 12, wherein user identifying information further comprises at least one of a token, an email address, and a pre-registered web page.

14. The method of claim 12, wherein electronic data is stored in the electronic database in one or more data substructures.

15. The method of claim 14, wherein the data substructures further comprises at least one of a user information data structure, a user access data structure, a program customer cross reference data structure, a program information data structure, a catalog data structure and a company information data structure.

16. The method of claim 12, wherein the parameters in one of the first set of parameters and the second set of parameters is related to a program manager and the parameters in the other of the first set of parameters and the second set of parameters is related to a customer.

17. The method of claim 16, wherein constructing a set of one or more webpages including electronic data corresponding to the selected parameters further comprises:
generating an active profile corresponding to the selected program manager and the selected customer;
accessing one or more data structures to retrieve program attributes and customer attributes corresponding to the generated active profile; and
retrieving and displaying on the at least one computing device, catalog information corresponding to the generated active profile.

18. The method of claim 12, wherein the electronic data corresponding to the selected first parameter, the selected second parameter or the selected third parameter further comprises at least one of catalog data, reporting data, order history data, terms and conditions data, branding data, frequently asked questions data, freight information data, quote data and order data.

19. The method of claim 18, wherein the branding data further comprises at least one of landing page information, button information, menu information, hyperlink information, home page banner information, icons, and logos.

20. The method of claim 12, wherein determining whether the user is permissioned to access data stored in an electronic database further comprises retrieving user access information from a user access data structure of the electronic database based on the received user identifying information by way of the access gateway.

21. The method of claim 12, further comprising:
displaying, via the constructed first set or second set of one or more webpages displayed on the at least one computing device, a catalog of items;
receiving, via the at least one computing device, at least one of an electronic order request and an electronic quote request for at least one item in the catalog; and
processing the received electronic order request or electronic quote request by:
automatically generating an email including information related to the electronic order request or the electronic quote request;
automatically transmitting the email to a computing device affiliated with each of the at least one item;
receiving a status email from each of the computing devices affiliated with each of the at least one item; and
automatically generating and transmitting a notification to the at least one computing device that provided the electronic order request or the electronic quote request.

22. The method of claim 12, further comprising:
displaying on the at least one computing device, one or more webpages having a template for at least one of uploading and entering the electronic data;
storing the uploaded and entered electronic data in the electronic database.
